# EUROPEAN PATENT SPECIFICATION

(11) **EP 3 591 334 B1**
(45) Date of publication and mention of the grant of the patent: **23.04.2025**
(21) Application number: 19183566.9
(22) Date of filing: 01.07.2019
(51) Int. Cl.: G01B 5/004, G01B 11/00, G02C 13/00

(54) **EYEGLASSES MEASUREMENT SYSTEM, EYEGLASSES MEASUREMENT METHOD AND EYEGLASSES MEASUREMENT PROGRAM**
BRILLENMESSSYSTEM, BRILLENMESSVERFAHREN UND BRILLENMESSPROGRAMM
SYSTÈME, PROCÉDÉ ET PROGRAMME DE MESURE DE LUNETTES

(30) Priority: 02.07.2018 JP 2018126313
(43) Date of publication of application: 08.01.2020
(73) Proprietor: NIDEK CO., LTD., Gamagori-shi, Aichi 443-0038 (JP)
(72) Inventor: TANAKA, Motoshi, Hiroishi-cho, Gamagori-shi, Aichi 443-0038 (JP)
(74) Representative: Hoefer & Partner Patentanwälte mbB

(56) References cited:
- EP-A1- 2 690 393
- EP-A1- 2 913 704
- GB-A- 288 585
- JP-A- 2016 193 467
- US-A1- 2011 085 132

## Description

### TECHNICAL FIELD

The present disclosure relates to an eyeglasses measurement system, an eyeglasses measurement method and an eyeglasses measurement program that measure eyeglasses.

### BACKGROUND

Eyeglasses are produced based on measurement results measured by a plurality of eyeglasses devices. For example, the plurality of eyeglasses devices are a lens meter for measuring optical characteristics of an eyeglasses lens, an eyeglasses frame shape measurement device for measuring a shape of an eyeglasses frame, a lens peripheral edge machining device for machining a peripheral edge of the eyeglasses lens, and the like (for example, see JP-A-2013-212573).

By the way, in the eyeglasses, the eyeglasses lens and the eyeglasses frame are assembled by forming a bevel on the peripheral edge of the eyeglasses lens and fitting the bevel into a groove of a rim of the eyeglasses frame. The bevel of the eyeglasses lens is not always fitted into the groove of the rim without gap, and an apex of the bevel may not come into contact with a groove bottom of the rim. In such a state, the layout of the eyeglasses (for example, an optical center position of the eyeglasses lens with respect to the eyeglasses frame, a distance between the optical centers of the left and right eyeglasses lenses, a height from the lower edge of the rim to the optical center position, and the like) was sometimes finished was different from a schedule.
From JP 2016 193467 A, a ball type shape determination device is known which determines a ball type shape used for processing the circumference of a spectacle lens with a spectacle lens processor.
From EP 2 690 393 A1, an eyeglass frame shape measurement apparatus is known that includes a measuring unit measuring shapes of right and left rims of an eyeglass frame. Measuring modes include a first measuring mode in which whole peripheries of both rims are measured; a second measuring mode in which the whole periphery of one of the right and left rims; and a third measuring mode in which nose side portions of the left rim and the nose side portion of the right rim are partially measured. A controller drives the measuring unit to measure the whole peripheries of both rims in the first measuring mode, for driving the measuring unit to measure the whole periphery of one of the left and right rims in the second mode, and drive the measuring unit to measure partially the nose side portions of both rims in the third mode.
From EP 2 913 704 A1, an eyeglass wearing image analysis device is known that includes: an acquisition means that acquires eyeglass frame type information; and a control means that performs a control operation based on the eyeglass frame type information.

### SUMMARY

An object of the present disclosure is to provide an eyeglasses measurement system, an eyeglasses measurement method and an eyeglasses measurement program that measure a layout in a state in which an eyeglasses lens is mounted in an eyeglasses frame.

In order to solve the problem, in the present disclosure there are provided features according to the independent claims.

### BRIEF DESCRIPTION OF DRAWINGS

Fig. 1 is a view illustrating an eyeglasses measurement system.
Fig. 2 is an appearance schematic view of an eyeglasses frame shape measurement device.
Fig. 3 is a top view of a frame holding portion included in the eyeglasses frame shape measurement device.
Fig. 4 is a perspective view of the frame holding portion included in the eyeglasses frame shape measurement device.
Fig. 5 is a schematic configuration view of a clamp mechanism included in the eyeglasses frame shape measurement device.
Figs. 6A and 6B are views illustrating a frame measurement portion included in the eyeglasses frame shape measurement device.
Fig. 7 is a view illustrating a control system of the eyeglasses frame shape measurement device.
Fig. 8 is an appearance schematic view of the eyeglasses measurement device.
Fig. 9 is a schematic configuration view of a storage portion included in the eyeglasses measurement device.
Fig. 10 is a view illustrating an optical system of the eyeglasses measurement device.
Fig. 11 is a view illustrating a control system of the eyeglasses measurement device.
Fig. 12 is a view illustrating eyeglasses in a framed state in which a lens is mounted in a frame.
Fig. 13 is a view for describing contact between a second surface and a measurement stylus in a second slider.
Figs. 14A and 14Ba are examples of a captured image acquired by the eyeglasses measurement device.
Fig. 15 is a view illustrating the eyeglasses in a state in which there is a gap between a groove of the frame and a bevel of the lens.
Fig. 16 is a view for describing conversion between a height BT and a PD height.

### DETAILED DESCRIPTION

### <Overview>

An overview of an eyeglasses measurement system according to an embodiment of the present disclosure will be described. The items classified by < > below can be used independently or in association.

For example, an eyeglasses measurement system (for example, an eyeglasses measurement system 1) measures eyeglasses. The eyeglasses may be eyeglasses in a state in which an eyeglasses lens (hereinafter, lens) is mounted in an eyeglasses frame (hereinafter, frame). The frame may be a frame having a rim at least at the lower edge. That is, the frame may be a frame in which a lens LE is framed at least at the lower edge of the rim of the frame. For example, such frames include a full rim frames, an under rim frames, and the like.

The eyeglasses measurement system may include an eyeglasses frame shape measurement device (for example, an eyeglasses frame shape measurement device 100). For example, the eyeglasses frame shape measurement device measures a shape of the frame. The shape of the frame may be an inner shape of the rim of the frame or an outer shape of the rim of the frame. The eyeglasses measurement system may also include an eyeglasses measurement device (for example, an eyeglasses measurement device 200). For example, the eyeglasses measurement device measures at least one of a layout of the eyeglasses, optical characteristics of the lens framed in the eyeglasses, and the like. The eyeglasses measurement system may be a system in which the eyeglasses frame shape measurement device and the eyeglasses measurement device are configured as separate devices. The system may be a system in which the eyeglasses frame shape measurement device and the eyeglasses measurement device are configured as an integrated device.

For example, in this embodiment, the eyeglasses measurement system may be configured to include at least the eyeglasses frame shape measurement device and the eyeglasses measurement device. In this case, the eyeglasses measurement system may be configured to include at least one of a lens meter, a cup attachment device, an axis aligning device, a lens peripheral edge machining device, and the like, in addition to the eyeglasses frame shape measurement device and the eyeglasses measurement device. For example, a lens meter measures optical characteristics in the lens framed in the eyeglasses or an unmachined lens. For example, the cup attachment device attaches a machining jig to the lens. For example, the axis aligning device sets an attachment position (that is, the axis aligning position) of a lens holding portion included in the lens peripheral edge machining device with respect to the lens. For example, the lens peripheral edge machining device machines the peripheral edge of the lens.

### <First Acquisition Portion>

For example, the eyeglasses measurement system includes a first acquisition portion (for example, a control portion 90). The first acquisition portion acquires first information which indicates a thickness of the rim of the frame of the eyeglasses, in which the thickness is in a depth direction of a groove formed on an inner peripheral surface of the rim. For example, the first information may be a height from a groove bottom of the rim to an outer edge of the rim based on a position of the groove bottom of the rim of the frame and a position of the outer edge of the rim of the frame. For example, the first acquisition portion may acquire, as the first information, a height from the groove bottom of the rim at any position of the radial angle of the rim to the outer edge of the rim at any position of the radial angle of the rim. As an example, the first acquisition portion may acquire at least one of a height from the groove bottom to the outer edge in an upper edge portion of the rim, a height from the groove bottom to the outer edge in a lower edge portion of the rim, and the like. For example, in this embodiment, the first acquisition portion acquires the height from the deepest position of the groove bottom of the rim to the position of the outermost edge at the outer edge of the rim as the first information (the thickness of the rim in the depth direction of the groove).

The first information may be acquired based on frame design data for creating a frame. In this case, the eyeglasses measurement system may have a configuration in which frame design data accumulated in a memory in advance is included and the first acquisition portion acquires the first information by reading the frame design data. In this case, the eyeglasses measurement system may have a configuration in which a cloud or server in which frame design data is stored is included, and the first acquisition portion accesses the cloud or server to invoke the frame design data to acquire the first information. Further, such first information may be acquired based on the position of the groove bottom of the rim detected by a groove bottom detection portion described later and the position of the outer edge of the rim detected by an outer edge detection portion described later. For example, frames are manufactured based on design data, but individual differences may occur even in the same frame. If the position of the groove bottom of the rim and the position of the outer edge of the rim are detected as in this embodiment, accurate first information can be acquired for each frame.

### <Groove Bottom Detection Portion>

For example, the eyeglasses measurement system includes a groove bottom detection portion (for example, a frame measurement portion 60). The groove bottom detection portion detects the position of the groove bottom of the rim in the frame. For example, in this embodiment, the groove bottom detection portion detects the deepest position of the groove bottom of the rim in the frame as the position of the groove bottom of the rim. That is, the groove bottom detection portion detects a position at which the groove bottom of the rim is vertically lowest in an eyeglasses wearing state, as the position of the groove bottom of the rim. The groove bottom detection portion may be configured to detect the position of the groove bottom of the rim at the position of at least one of the radial angle of the rim.

### <Outer Peripheral Edge Detection Portion>

For example, the eyeglasses measurement system includes an outer edge detection portion (for example, the frame measurement portion 60). The outer edge detection portion detects the position of the outer edge of the rim in the frame. For example, the position of the outer edge of the rim may be the position of the outer edge on the front side of the rim in the eyeglasses wearing state, or the position of the outer edge on the rear side of the rim in the eyeglasses wearing state. The central position of the front and rear sides of the rim in the eyeglasses wearing state may be the position of the outer edge of the rim. For example, in this embodiment, the outer edge detection portion detects the lowest position of the outer edge of the rim of the frame as the position of the outer edge of the rim. That is, the outer edge detection portion detects a position where the outer edge of the rim is lowest in the vertical direction in the eyeglasses wearing state, as the position of the outer edge of the rim. The outer edge detection portion may be configured to detect the position of the outer edge of the rim at the position at least one of the radial angle of the rim.

For example, the eyeglasses measurement system may have a configuration in which the groove bottom detection portion and the outer edge detection portion are combined. As an example, the eyeglasses measurement system may have a contact type configuration in which a measurement stylus (for example, a measurement stylus 62) is brought into contact, as the groove bottom detection portion and the outer edge detection portion. In this case, the measurement stylus may contact the groove bottom of the rim of the frame, and an abutment surface (for example, a second surface 23a) of a frame holding portion (for example, a frame holding portion 20) abutting on the outer edge of the rim of the frame, the fame holding portion abutting on the outer edge of the rim to hold the frame. With such a configuration, the eyeglasses measurement system may acquire the position of the groove bottom of the rim and the position of the outer edge of the rim based on a contact position of the measurement stylus. For example, when manufacturing the eyeglasses, the shape (for example, a three-dimensional shape of the groove of the rim of the frame) of the frame is acquired as target lens shape data by inserting the measurement stylus into the groove of the rim to be rotated once, and machining control data for machining the lens is created using this target lens shape data. Depending on the shape of the measurement stylus, the measurement stylus does not necessarily coincide with the groove bottom of the rim, and thus the position of the bevel apex formed on the lens based on the target lens shape data changes according to the contact position of the measurement stylus. As described above, by the measurement stylus contacting both the groove bottom of the rim and the abutment surface (that, the lowermost edge of the rim) abutting on the outer edge of the rim, the first information can be acquired with high accuracy without providing a configuration for considering an error from the position of the groove bottom of the rim to the contact position of the measurement stylus.

In addition, as one example, the eyeglasses measurement system may have a non-contact type configuration including a projection optical system and a light receiving optical system as the groove bottom detection portion and the outer edge detection portion. The projection optical system may emit the measurement light flux from the light source toward the groove bottom of the rim of the frame and the outer edge of the rim of the frame. In the light receiving optical system, the light receiving element may receive the reflected light flux in which the measurement light flux is reflected by the groove bottom of the rim of the frame and the outer edge of the rim of the frame. With such a configuration, the eyeglasses measurement system may detect the position of the groove bottom of the rim and the position of the outer edge of the rim based on the reflected light flux. For example, as described above, by irradiating the measurement light flux to both the groove bottom of the rim and the outer edge of the rim, the position of the groove bottom of the rim (that is, the position of the bevel apex formed on the lens) and the position of the outer edge of the rim can be accurately acquired, and the first information can be accurately acquired.

For example, the eyeglasses measurement system may include the groove bottom detection portion and the outer edge detection portion as separate configurations. In this case, one of the groove bottom detection portion and the outer edge detection portion may have the contact type configuration in which the measurement stylus (for example, the measurement stylus 62) is brought into contact, and the other may have the non-contact type configuration including the projection optical system and the light receiving optical system. As an example, the eyeglasses measurement system may detect the position of the groove bottom of the rim by bringing the measurement stylus into contact with the groove bottom of the rim and may detect the position of the outer edge of the rim based on the reflected luminous flux obtained by irradiating the outer edge of the rim with the measurement light flux. Of course, the eyeglasses measurement system may detect the position of the groove bottom of the rim based on the reflected light flux obtained by irradiating the groove bottom of the rim with the measurement light flux and may detect the position of the outer edge of the rim by bringing the measurement stylus into contact with the outer edge of the rim.

For example, when the eyeglasses measurement system has a contact type configuration in which the measurement stylus is brought into contact as the groove bottom detection portion and the outer edge detection portion, the first acquisition portion can acquire the first information based on a movement position of the measurement stylus. That is, the first acquisition portion can acquire the thickness of the rim in the depth direction of the groove based on the movement position of the measurement stylus. For example, in a case where the eyeglasses measurement system has a non-contact type configuration including the projection optical system and the light receiving optical system as the groove bottom detection portion and the outer edge detection portion, the first acquisition portion can acquire the first information based on the reflected light flux from the groove bottom of the rim and the reflected light flux from the outer edge of the rim. That is, the first acquisition portion can acquire the thickness of the rim in the depth direction of the groove based on the reflected luminous flux from the groove bottom of the rim and the reflected luminous flux from the outer edge of the rim.

### <Second Acquisition Portion>

For example, the eyeglasses measurement system includes a second acquisition portion (for example, a control portion 260). The second acquisition portion acquires second information which indicates a height from the position of the outer edge of the rim to an optical center position of the lens in a framed state in which the lens of the eyeglasses is mounted in a frame. As an example, in this embodiment, the second acquisition portion acquires a height from a lowest position of the outer edge of the rim to the optical center position of the lens, as the second information. That is, the second acquisition portion acquires a distance connecting the lowest position of the outer edge of the rim and the optical center position in the vertical direction, as the second information. The second acquisition portion may acquire a height from the outer edge of the rim directly below the optical center position of the lens to the optical center position of the lens as the second information. That is, the second acquisition portion may acquire a distance connecting the position of the outer edge of the rim directly below the optical center position of the lens and the optical center position in the vertical direction as the second information.

### <Third Acquisition Portion>

For example, the eyeglasses measurement system includes third acquisition mans (for example, the control portion 260). The third acquisition portion acquires third information which indicates a height from the position of the groove bottom of the rim of the frame in the framed state to the optical center position of the lens based on the first information acquired by the first acquisition portion and the second information acquired by the second acquisition portion. For example, the third acquisition portion may acquire the third information by obtaining a difference between the first information (that is, the thickness of the rim in the depth direction of the groove) acquired by the first acquisition portion and the second information (that is, the height from the position of the outer edge of the rim to the optical center position of the lens) acquired by the second acquisition portion.

As an example, in this embodiment, the third acquisition portion acquires a height from the deepest position of the groove bottom of the rim to the optical center position of the lens as the third information. That is, in this embodiment, the third acquisition portion acquires BT, which is one of indices indicating an eye point height, as the third information.

The third acquisition portion may be configured to acquire the height from the position of the groove bottom of the rim directly below the optical center position of the lens to the optical center position as the third information. That is, the third acquisition portion may be configured to acquire a PD height, which is one of the indices indicating the eye point height, as the third information. In this case, the third acquisition portion may acquire the PD height as the third information by converting the acquired BT into the PD height. In this case, the first acquisition portion may be configured to acquire, as the first information, the height from the position of the groove bottom of the rim directly below the optical center position of the lens to the lowest position of the outer edge of the rim and the second acquiring portion may be configured to acquire, as the second information, the height from the position of the groove bottom of the rim directly below the optical center position of the lens to the optical center position. The third acquisition portion may acquire the PD height based on such first information and second information.

For example, in a framed state, in the eyeglasses, it can be considered that the position of the bevel apex of the lens and the position of the groove bottom of the rim of the frame coincide (substantially coincide) with each other. However, since the bevel apex of the lens is hidden in the groove of the rim of the frame, it is difficult to measure the height from the position of the bevel apex of the lens to the optical center position. That is, it is difficult to measure the height from the groove bottom of the rim of the frame to the optical center position of the lens. However, for example, the eyeglasses measurement system in this embodiment acquires the first information which indicates the thickness of the rim of the frame of the eyeglasses in the depth direction of the groove, acquires the second information which indicates the height from the position of the outer edge of the rim to the optical center position of the lens in the framed state in which the lens of the eyeglasses is mounted in the frame, and acquires the third information which indicates the height from the position of the groove bottom of the rim in the framed state to the optical center position, based on the first information and the second information. With such a configuration, the optical center position (that is, the height from the bevel apex to the optical center position of the lens) of the lens can be easily obtained from the position of the groove bottom of the rim.

Also, for example, the eyeglasses measurement system in this embodiment detects the deepest position of the groove bottom of the rim in the frame and the lowest position of the outer edge of the rim, acquires the height from the deepest position of the groove bottom of the rim to the lowest position of the rim as the first information, acquires the height from the lowermost edge of the rim to the optical center position of the lens as the second information, and acquires the height from the deepest position of the groove bottom of the rim to the optical center position is acquired as third information, based on the first information and the second information. With this, it is possible to easily obtain, for example, the height (that is, BT which is one of the eye point indices) from the position where the bevel apex is the lowermost edge to the optical center position of the lens.

### <Comparison Information Acquisition Portion>

For example, the eyeglasses measurement system includes a comparison information acquisition portion (for example, the control portion 260). The comparison information acquisition portion acquires comparison information obtained by comparing the third information in the framed state of the eyeglasses with the height from the position of the groove bottom of the rim to the optical center position set when the lens is machined. That is, the comparison information acquisition portion acquires the comparison information obtained by comparing the third information of the framed state of the eyeglasses acquired by the third acquisition portion with a height from the peripheral edge (for example, a bevel apex) of target lens shape data to the optical center position, in which the height is set when the lens to be framed in the eyeglasses is machined. For example, the comparison information may be information in which respective values of the third information of the eyeglasses and the height from the groove bottom of the rim to the optical center position are arranged, in which the height is set when the lens is machined.

For example, in this embodiment, the comparison information acquisition portion may acquire comparison information obtained by comparing the first height (third information) from the deepest position of the groove bottom of the rim to the optical center position of the lens in the eyeglasses with the second height from the deepest position (that is, the position of the lowermost edge of the target lens shape data) of the groove bottom of the rim to the optical center position, in which the second height is set when the lens is machined. For example, in this embodiment, the comparison information acquisition portion may acquire comparison information obtained by comparing the third height (third information) from the position of the groove bottom of the rim directly below the optical center position of the lens to the optical center position with the fourth height from the position (that is, the position of the peripheral edge of the target lens shape data directly below the optical center position) of the groove bottom of the rim directly below the optical center position of the lens to the optical center position, the fourth height is set when the lens is machined.

### <Determination portion>

For example, the eyeglasses measurement system includes a determination portion (for example, the control portion 260). The determination portion determines quality of the third information in the framed state of the eyeglasses based on the height from the position of the groove bottom of the rim to the optical center position, in which the height is set when the lens is machined. For example, the determination portion may determine the quality of the third information of the eyeglasses based on an amount of deviation between the acquired third information and the height from the position of the groove bottom of the rim to the optical center position, in which the height is set when the lens is machined. With this, an operator can easily compare and determine whether the layout of the eyeglasses is finished as planned, whether the layout of the eyeglasses is appropriate, and the like.

More specifically, the determination portion determines the quality with respect to the BT which is one of the indices indicating the eye point height, by detecting the amount of deviation between the acquired measurement result and the BT which is set when the lens is machined. In this case, the determination portion may determine that the BT of the eyeglasses is good when the amount of deviation is within a predetermined error range. Further, in this case, the determination portion may determine that the BT of the eyeglasses is not good when the amount of deviation exceeds the predetermined error range. More specifically, the determination portion may determine the quality with respect to the PD height which is one of the indices indicating the eye point height, by detecting the amount of deviation between the acquired measurement result and the PD height which is set when the lens is machined. In this case, the determination portion may determine that the PD height of the eyeglasses is good when the amount of deviation is within a predetermined error range. In this case, the determination portion may determine that the PD height of the eyeglasses is not good when the amount of deviation exceeds the predetermined error range. The predetermined error range may be set in advance by experiment, simulation or the like, or may be set arbitrarily.

For example, the determination portion may determine quality of at least one piece of information such as the height from a boxing center position of the lens framed in the eyeglasses to the optical center position, a boxing center-to-center distance FPD in the left and right lenses, the optical center-to-center distance PD in the left and right lenses, and the like, without being limited to the third information of the eyeglasses. That is, the determination portion may determine quality of information regarding the layout of the eyeglasses. For example, the determination portion may detect the amount of deviation between the layout information of the eyeglasses acquired by measuring the eyeglasses and the layout information which is set when the lens to be framed in the eyeglasses is machined and determine quality of the layout information of the eyeglasses based on the amount of deviation.

The determination portion may determine quality of the optical characteristics of the eye point position (pupil position of the wearer) of the wearer with respect to the eyeglasses of the framed state in which the lens is mounted in the frame, using the layout information which is set when the lens framed in the eyeglasses is machined. For example, the optical characteristic may be at least one of a spherical power, a cylindrical power, an astigmatic axis angle, a prism amount, and the like.

For example, at least one of the third information acquired by the third acquisition portion, the comparison information acquired by the comparison information acquisition portion, the determination result of the quality of the third information, the determination result of the quality of the layout information, the determination result of the quality of the optical characteristics at the eye point position may be output by display on a monitor (for example, a monitor 202), a tablet terminal, and the like, printed using a printer and the like, stored in an external memory (for example, a USB memory, a hard disk, and a server), and the like.

The present disclosure is not limited to the system described in this embodiment. For example, it is also possible that terminal control software (program) performing the functions of the following embodiments are supplied to a system or apparatus via a network or various storage media, and a control device (for example, a CPU or the like) of the system or apparatus reads and executes the program.

### <Example>

Hereinafter, the eyeglasses measurement system will be described with reference to the drawings.

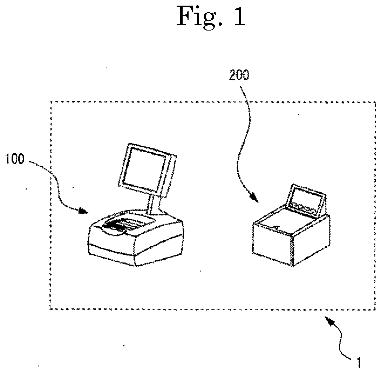

Fig. 1 is a view illustrating an eyeglasses measurement system according to this embodiment. The eyeglasses measurement system 1 in this embodiment includes at least an eyeglasses frame shape measurement device 100 and an eyeglasses measurement device 200. Of course, the eyeglasses measurement system 1 may include, in addition to these devices, a lens meter for measuring the optical characteristics of the eyeglasses lens, a cup attachment device for attaching a machining jig (for example, a cup) to the eyeglasses lens, a lens peripheral edge machining device for machining the peripheral edge of the eyeglasses lens.

The eyeglasses measurement system 1 in this embodiment may be a system in which the eyeglasses frame shape measurement device 100 and the eyeglasses measurement device 200 are configured as an integrated device. The eyeglasses measurement system 1 in this embodiment may be a system in which the eyeglasses frame shape measurement device 100 and the eyeglasses measurement device 200 are configured as separate devices. In this case, the eyeglasses frame shape measurement device 100 and the eyeglasses measurement device 200 may be connected to each other through a communication network. For example, the communication network may be wired communication using an optical fiber or the like, or wireless communication using infrared, Wi-Fi (registered trademark), Bluetooth (registered trademark) or the like. In this case, the eyeglasses measurement system 1 may include a shared server. For example, the shared server may include a control unit and a memory, and may perform operations of each data, storage of each data, and the like. In addition, in this example, a case of the eyeglasses measurement system in which the eyeglasses frame shape measurement device 100 and the eyeglasses measurement device 200 are configured as separate devices is taken as an example.

### <Eyeglasses Frame Shape Measurement Device>

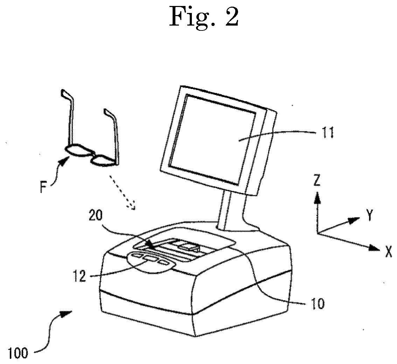

Fig. 2 is an appearance schematic view of an eyeglasses frame shape measurement device. In this example, with reference to a frame F in the eyeglasses wearing state, the left and right direction thereof is represented as the X-direction, the up and down direction as the Y-direction, and the front and rear direction as the Z-direction. That is, the left and right direction (horizontal direction) of the eyeglasses frame shape measurement device is the X-direction, the up and down direction (vertical direction) is the Z-direction, and the front and rear direction (depth direction) is the Y-direction. For example, the eyeglasses frame shape measurement device 100 includes an opening window 10, a monitor (display) 11, a switch unit 12, a frame holding portion 20, a frame measurement portion 60 (see Fig. 2), and the like.

For example, the monitor 11 is a touch panel. That is, the monitor 11 functions as an operation unit (controller). A signal corresponding to an operation instruction input from the monitor 11 is output to the control portion 90 described later. The monitor 11 may not be of the touch panel type, and may have a configuration in which the monitor 11 and the operation unit are provided separately. In this case, at least one of a mouse, a joystick, a keyboard, a portable terminal, and the like can be used as the operation unit.

The switch unit 12 is used when inputting a signal for causing the eyeglasses frame shape measurement device 100 to execute various processing. For example, the various processes are the start of measurement and the like. In this example, the switch unit 12 is provided on a main body cover of the eyeglasses frame shape measurement device 100. Of course, the switch unit 12 may be displayed electronically on a screen of the monitor 11.

### <Frame Holding Portion>

The frame holding portion 20 is disposed inside the opening window 10. The frame holding portion 20 holds the frame F in a desired state by abutting on the outer edge of the rim in the frame F. The frame holding portion 20 may be configured to be able to hold at least one of a full rim frame and the like in which a bevel of a lens LE is fitted around the entire circumference of the rim of the frame F, an under rim frame in which the bevel of the lens LE is fitted into at least the lower end of the rim of the frame F, and the like. That is, it may be configured to be able to hold a frame having the rim of the frame F at least at a lower edge. For example, in this example, a configuration in which the frame holding portion 20 holds the full rim frame is exemplified.

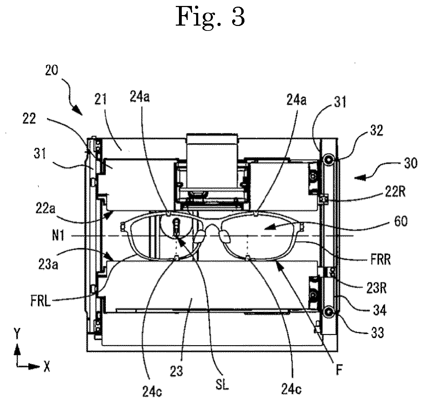

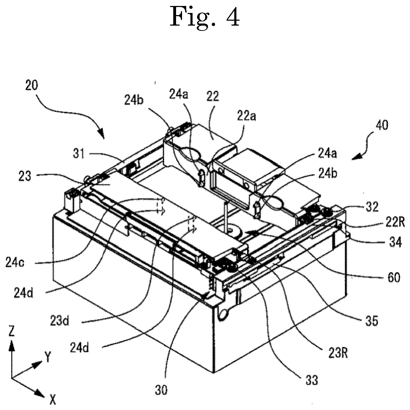

Figs. 3 and 4 are views for describing the frame holding portion 20. Fig. 3 is a top view of the frame holding portion 20. Fig. 4 is a perspective view of the frame holding portion 20. In Fig. 4, illustration of the frame F held by the frame holding portion 20 is omitted. For example, the frame holding portion 20 includes a holder base 21, a first slider 22, a second slider 23, an opening and closing movement mechanism 30, a clamp mechanism 40, and the like.

The first slider 22 and the second slider 23 are placed on the holder base 21. The first slider 22 has a first surface 22a that abuts on the upper edges of a left rim FRL and a right rim FRR of the frame F. The second slider 23 has a second surface 23a that abuts on the lower edges of the right rim FRR and the left rim FRL of the frame F. The first surface 22a and the second surface 23a face each other. The first surface 22a and the second surface 23a are moved by the opening and closing movement mechanism 30 in a direction in which spacing between the first surface 22a and the second surface 23a is opened or closed (a direction in which spacing widens and the direction in which spacing narrows). In addition, clamp pins provided in the clamp mechanism 40 are disposed to protrude on the first surface 22a and the second surface 23a.

The clamp pins clamp (hold) the left and right rims from the front and rear direction of the rims (front and rear sides in the eyeglasses wearing state). The first slider 22 is provided with a pair of clamp pins 24a and 24b as clamp pins. The clamp pin 24a and the clamp pin 24b are disposed at two positions and clamp the upper edges of the left rim FRL and the right rim FRR. The second slider 23 is provided with a pair of clamp pins 24c and 24d as clamp pins. The clamp pin 24c and the clamp pin 24d are disposed at two positions and clamp the lower edges of the left rim FRL and the right rim FRR.

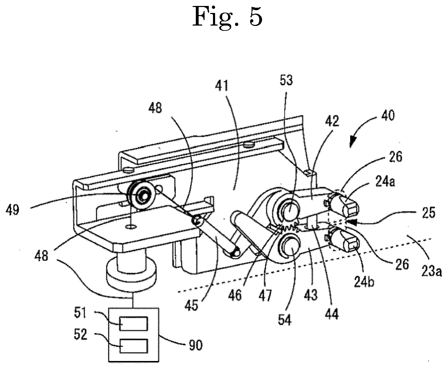

For example, an abutment portion 25 (see Fig. 5) which is a part of the second surface 23a may be provided between the clamp pin 24c and the clamp pin 24d. For example, depending on the shape of the frame F, the lowermost edge of the rim of the frame F may be clamped with the clamp pin 24c and the clamp pin 24d. Since the clamp pin 24c and the clamp pin 24d protrude from a hole 26 (see Fig. 5) provided on the second surface 23a, in such a case, when the frame F is held by the first slider 22 and the second slider 23, the lowermost edge of the rim of the frame F enters the depth side of the second surface 23a. When the lowermost edge of the rim of the frame F enters the depth side of the second surface 23a, the lowest position of the outer edge of the rim cannot be accurately detected using the frame measurement portion 60 described later. For example, in this example, the abutment portion 25 is provided to prevent the lower edge of the rim of the frame F from entering the depth side of the second surface 23a.

The opening and closing movement mechanism 30 includes two guide rails 31, a pulley 32, a pulley 33, a wire 34, a spring 35, and the like. The guide rails 31 are disposed on the left and right of the holder base 21 and extend in the Y-direction. The wire 34 is wound around the pulley 32 and the pulley 33. The right end portion 22R of the first slider 22 is attached to the left side of the wire 34. The right end portion 23R of the second slider 23 is attached to the right side of the wire 34. The spring 35 always biases spacing between the first slider 22 and the second slider 23 in the closing direction. By having such a configuration, the opening and closing movement mechanism 30 moves the first slider 22 and the second slider 23 in the direction in which the spacing is widened and the spacing is narrowed, with the center line N1 in the X-direction (see Fig. 3) as a center. That is, the first slider 22 and the second slider 23 are moved in the horizontal direction. When the first slider 22 moves, the second slider 23 also moves by being interlocked.

Fig. 5 is schematic configuration view of the clamp mechanism 40. Fig. 4 illustrates the clamp mechanism 40 disposed on the left side of the second slider 23. The clamp mechanism includes a base plate 41, the clamp pin 24a, the clamp pin 24b, a first arm 42, a second arm 43, a compression spring 44, a spring 45, a gear 46, a gear 47, a wire 48, a pulley 49, a drive unit 240, and the like.

The base plate 41 is disposed inside the first slider 22. The first arm 42 is rotatably held relative to the base plate 41 by the rotation shaft 53. The gear 46 centered on the rotation shaft 53 is formed on the first arm 42. The second arm 43 is rotatably held relative to the base plate 41 by the rotation shaft 54. The gear 47 centered on the rotation shaft 54 is formed on the second arm 43. The gear 46 and the gear 47 mesh with each other. The clamp pin 24c is attached to the tip of the first arm 42. The clamp pin 24d is attached to the tip of the second arm 43. The compression spring 44 is provided between the first arm 42 and the second arm 43. Spacing between the clamp pin 24c and the clamp pin 24d is always biased by the compression spring 44 in the opening direction. One end of the spring 45 is attached to the rear end of the first arm 42. The wire 48 is fixed to the other end of the spring 45. The wire 48 is connected to the drive unit 240 via the pulley 49 rotatably attached to the base plate 41.

For example, the drive unit 240 includes a shaft 51, a motor 52, and the like. The shaft 51 winds the wire 48. The motor 52 rotates the shaft 51. For example, when the motor 52 is driven and the wire 48 is wound up, the first arm 42 rotates counterclockwise around the rotation shaft 53. At this time, since the gear 46 and the gear 47 are in mesh with each other, the second arm 43 rotates clockwise around the rotation shaft 54. With this, the clamp pin 24c and the clamp pin 24d are interlocked and closed, and the lower edge of the left rim FRL is clamped.

The clamp mechanism (that is, the clamp mechanism disposed on the right side of the second slider 23) for clamping the lower edge of the right rim FRR may have a configuration in which the clamp mechanism 40 is reversed to the left and right.as illustrated in Fig. 4. In addition, the clamp mechanisms (that is, the clamp mechanisms disposed respectively on the left and right sides of the first slider 22) for clamping the upper edges of the right rim FRR and the left rim FRL may have a configuration in which the clamp mechanisms 40 disposed on the second slider 23 are vertically reversed.

The motor 52 and the shaft 51 may be configured to be respectively disposed in the clamp mechanisms 40 provided at four positions, but may be configured to be commonly used in the clamp mechanisms 40 provided at four positions. In this example, in any case, the four clamp pins are configured to be simultaneously opened and closed.

### <Frame Measurement Portion>

The frame measurement portion 60 is disposed below the frame holding portion 20. The frame measurement portion 60 detects the position of a groove bottom of the rim in the frame F. In this case, the frame measurement portion 60 detects the position of the groove bottom of the rim by inserting a measurement stylus 62 described later into the groove of the rim of the frame F and moving the measurement stylus 62 in contact with the groove bottom of the rim. The frame measurement portion 60 may detect the deepest position (that is, the position at which the coordinate in the Y-direction at the groove bottom of the rim detected by the measurement stylus 62 is the smallest) of the groove bottom of the rim. For example, a shape of the groove of the rim may be measured based on the detected position of the groove bottom of the rim.

The frame measurement portion 60 detects the position of the outer edge of the rim in the frame F. The frame measurement portion 60 may detect the lowest position of the outer edge of the rim (for example, the position at which the coordinate in the Y-direction at the outer edge of the rim is the smallest). In this case, the frame measurement portion 60 may detect the lowest position of the outer edge of the rim by bringing the measurement stylus 62 described later into contact with the abutment surface (that is, the second surface 23a) of the frame holding portion 20 abutting on the outer edge of the rim.

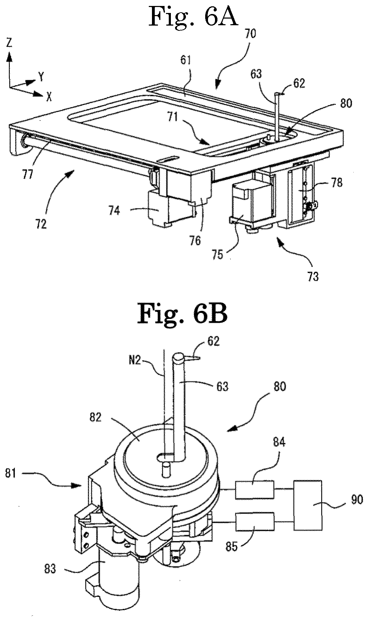

Figs. 6A and 6B are views for describing the frame measurement portion 60. Fig. 6A is a schematic configuration view of a moving unit 70. Fig. 6B is a schematic configuration view of a measurement stylus holding portion 80. For example, the frame measurement portion 60 includes a base portion 61, the measurement stylus 62, a measurement stylus shaft 63, the moving unit 70, the measurement stylus holding portion 80, and the like. The base portion 61 is a rectangular frame extended in the X-direction and the Y-direction, and is disposed below the frame holding portion 20. The measurement stylus 62 is inserted into the groove of the rim of the frame F. The measurement stylus 62 is in contact with the groove bottom of the frame F and the abutment surface (that is, the second surface 23a) between the frame holding portion 20 and the outer edge of the rim. The measurement stylus 62 is attached to the tip of the measurement stylus shaft 63. The moving unit 70 moves the measurement stylus holding portion 80 relative to the frame F. The measurement stylus holding portion 80 holds the measurement stylus 62 and the measurement stylus shaft 63.

The moving unit 70 moves the measurement stylus holding portion 80 in the X-direction, the Y-direction, and the Z-direction. For example, the moving unit 70 includes a Y moving unit 71, an X moving unit 72, a Z moving unit 73, a motor 74, a motor 75, a motor 76, and the like. The Y moving unit 71 moves the measurement stylus holding portion 80 in the Y-direction. By driving of the motor 74, the Y moving unit 71 moves the measurement stylus holding portion 80 in the Y-direction, along a guide rail (not illustrated) extending in the Y-direction. The X moving unit 72 moves the Y moving unit 71 in the X-direction. The X moving unit 72 moves the Y moving unit 71 in the X-direction along the guide rail 77 extending in the X-direction by the drive of the motor 76. The Z moving unit 73 moves the measurement stylus holding portion 80 in the Z-direction. The Z moving unit 73 is attached to the Y moving unit 71, and moves the measurement stylus holding portion 80 in the Z-direction along the guide rail 78 extending in the Z-direction, by driving of the motor 75.

The measurement stylus holding portion 80 includes a rotation unit 81 that rotates the measurement stylus shaft 63 around a rotation axis N2 extending in the Z-direction. The rotation unit 81 includes a rotation base 82 to which the measurement stylus shaft 63 is attached, and a motor 83 for rotating the rotation base 82 about the rotation axis N2. The rotation base 82 holds the measurement stylus shaft 63 so as to be movable (tiltable) in the direction of the tip of the measurement stylus 62. In addition, the rotation base 82 holds the measurement stylus shaft 63 so as to be movable in the Z-direction. The position of the measurement stylus 62 in the tip direction and the central position of the measurement stylus shaft 63 are detected by an encoder 84 which is a detector. The position of the measurement stylus 62 in the Z-direction and the position of the measurement stylus shaft 63 in the Z-direction are detected by an encoder 85 which is a detector. The measurement stylus holding portion 80 includes a measurement pressure application mechanism (not illustrated) for applying measurement pressure to press the tip of the measurement stylus 62 against the grooves of the rims (right rim FRR and left rim FRL) and the abutment surface (second surface 23a).

In this example, the frame measurement portion 60 may serve as a measurement portion for detecting the position of the groove bottom of the rim and measuring the shape of the groove of the rim and a measurement portion for measuring a shape of a peripheral edge of a demo lens or a template. In this case, the frame measurement portion 60 can measure the shape of the peripheral edge of the demo lens or the template by detecting movement of the measurement stylus shaft 63 by bringing the measurement stylus shaft 63 into contact with the peripheral edge of the demo lens or the template. For the configuration of such a frame measurement portion 60, see, for example, JP-A-2001-122899 and JP-A-2013-068439, and the like.

### <Control Portion>

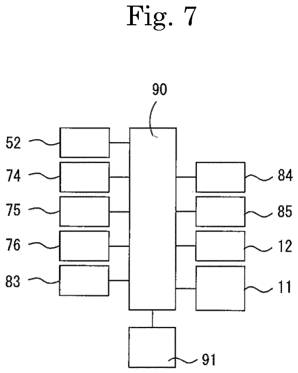

Fig. 7 is a view illustrating a control system of the eyeglasses frame shape measurement device 100. For example, the control portion 90 is electrically connected to the monitor 11, the switch unit 12, a non-volatile memory 91 (hereinafter, the memory 91), the encoders (encoders 84 and 85), and the motors (motors 52, 74, 75, 76, and 83). The memory 91 may be a non-transitory storage medium capable of holding stored contents even when the supply of power is shut off. For example, as the memory 91, a hard disk drive, a flash ROM, a removable USB memory, or the like can be used. The memory 91 may store the position of the groove bottom of the rim in the frame F, the shape of the groove, the position of the outer edge of the rim, and the like measured by the frame measurement portion 60.

For example, the control portion 90 is realized by a general CPU (processor), a RAM, a ROM, and the like. For example, the CPU controls driving of each portion in the eyeglasses frame shape measurement device 100. For example, the RAM temporarily stores various information. For example, the ROM stores various programs executed by the CPU. The control portion 90 may be constituted by a plurality of control portions (namely, a plurality of processors).

### <Eyeglasses Measurement Device>

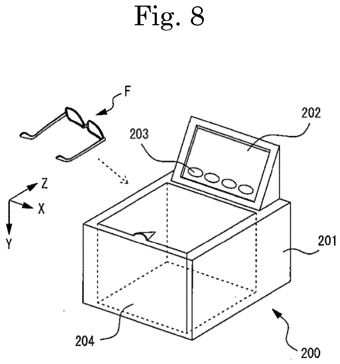

Fig. 8 is an appearance schematic view of the eyeglasses measurement device 200. In this example, with reference to the frame F in the eyeglasses wearing state, the left and right direction is represented as the X-direction, the up and down direction as the Y-direction, and the front and rear direction as the Z-direction. That is, the left and right direction (horizontal direction) of the eyeglasses measurement device 200 is the X-direction, the up and down direction (vertical direction) is the Y-direction, and the front and rear direction (depth direction) is the Z-direction. For example, the eyeglasses measurement device 200 includes a casing 201, a monitor (display) 202, an operation button 203, and the like. The casing 201 includes a storage portion 204 inside thereof.

For example, the monitor 202 is a touch panel. That is, the monitor 202 functions as an operation unit. A signal corresponding to an operation instruction input from the monitor 202 is output to the control portion 260 described later. The operation button 203 is displayed on the monitor 202. The operation button 203 is used when inputting a signal for causing the eyeglasses measurement device 200 to execute various processing. For example, the various processing include measurement of optical characteristics of the lens LE.

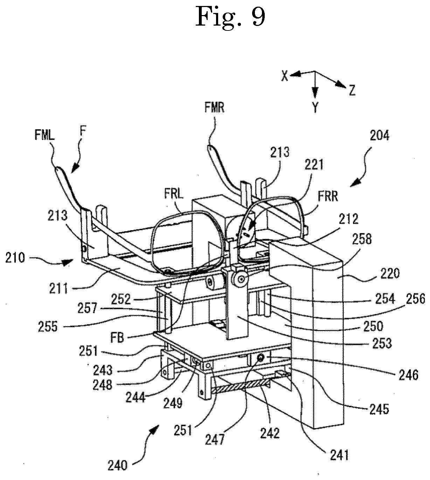

Fig. 9 is a schematic configuration view of the inside of the storage portion 204. For example, the storage portion 204 includes a frame support portion 210, a lens measurement portion 220, a drive unit 240, and the like.

### <Frame Support Portion>

For example, the frame support portion 210 supports the frame F with the lower edge sides of the rims (left rim FRL and right rim FRR) in the frame F directed upward. The frame support portion 210 may be configured to support the frame F with the upper edge sides of the rims in the frame F directed upward.

For example, the frame support portion 210 includes a base 211, and a front support portion 212 and a rear support portion 213 provided on the base 211. The front support portion 212 has a "U"-shape opening upward. The front support portion 212 supports a bridge FB in the frame F. In this example, the bridge FB is supported by mounting the frame F on the front support portion 212 with the upper edge side of the rim directed downward. Of course, the bridge FB may be configured to be supported by mounting the frame F on the front support portion 212 with the lower edge side of the rim directed downward. The rear support portion 213 has a "U"-shape opening upward. The rear support portion 213 supports temple tips (left temple tip FML and right temple tip FMR) in the frame F. In this example, the frame F is mounted on the rear support portion 213 with the upper edge side of the rim directed downward, thereby supporting the temple tips. Of course, the frame F may be mounted on the rear support portion 213 with the lower edge side of the rim directed downward, thereby supporting the temple tips.

### <Lens Measurement Portion>

The lens measurement portion 220 measures the optical characteristics of the lens LE in the eyeglasses (hereinafter, referred to as eyeglasses) in a framed state in which the lens LE is mounted in the frame F. The optical characteristics of the lens LE may be at least one of a spherical power S, a cylindrical power C, an astigmatic axis angle A, and a prism amount Δ. The lens measurement portion 220 also measures the length from an optical center position OC in the lens LE of the eyeglasses to a predetermined position. For example, the predetermined position may be the length to the lower edge of the rim in the frame F of the eyeglasses, and the like. For example, the lens measurement portion 220 includes abutment pins 221, a measurement optical system 230, and the like.

The abutment pins 221 are fixed to the upper surface of an index plate 233 described later. The abutment pin 221 abuts on the rear surface of the lens LE. For example, the abutment pins 221 are constituted by three pins, and are respectively disposed so as to be equidistant and equiangular to an optical axis L1 of the measurement optical system 230. That is, the abutment pins 221 are disposed such that the distances from a base point to the abutment pins 221 are equal, by using a point at which the optical axis L1 passes through the index plate 233 as the base point. Further, the abutment pins 221 are disposed such that angles formed by two straight lines connecting the base point and each abutment pins 221 are equal (that is, 120 degrees).

### <Measurement Optical System>

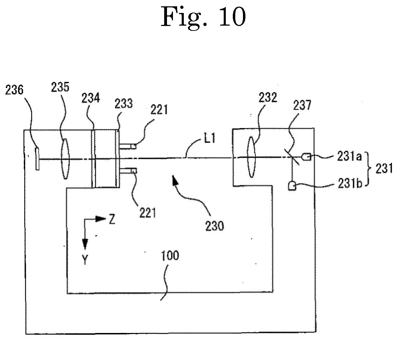

Fig. 10 is a view illustrating an optical system in the eyeglasses measurement device 200. For example, the measurement optical system 230 includes a light source 231, a collimator lens 232, an index plate 233, a screen 234, an imaging lens 235, an imaging element 236, a half mirror 237, and the like.

The light source 231 includes a first light source 231a and a second light source 231b. For example, the first light source 231a may be any light source that can emit a measurement light flux having a wavelength different from that of the second light source 231b. In this case, the first light source 231a may be a light source that can emit a measurement light beam different from that of the second light source 231b in at least one of a peak of the wavelength and a wavelength band. For example, in this example, a light source emitting infrared light is used as the first light source 231a, and a light source emitting visible light is used as the second light source 231b.

On the index plate 233, a measurement index for measuring the optical characteristics of the lens LE is formed. For example, a portion of the measurement index formed on the index plate 233 allows both the measurement light flux emitted from the first light source 231a and the measurement light flux emitted from the second light source 231b to pass. For example, the portion other than the measurement index in the index plate 233 shields the measurement light flux emitted from the first light source 231a, but allows the measurement light flux emitted from the second light source 231b to pass.

For details of the configuration of the light source and the index plate, the configuration of the measurement index formed on the index plate, and the like, see, for example, JP-A-2018-36255. Further, regarding details of the measurement of the optical characteristics of the lens LE using the measurement index, see, for example, JP-A-2008-241694.

The collimator lens 232 makes the measurement light flux emitted from the light source 231 parallel (including substantially parallel) to the optical axis L1. The screen 234 is provided at a position spaced apart from the index plate 233 by a predetermined distance. The screen 234 also projects an image of the measurement index formed on the index plate 233. The imaging element 236 may be configured by a charge coupled device (CCD) or a complementary metal oxide semiconductor (CMOS). The half mirror 237 passes or reflects the measurement light beam emitted from the light source 231.

### <Drive Unit>

The drive unit 240 moves the frame support portion 210 in the X-direction, the Y-direction, and the Z-direction with respect to the lens measurement portion 220. A nut portion 241 is fixed to the lower portion of the lens measurement portion 220, and a feed screw 242 extending in the X-direction is screwed into the nut portion 241. Both ends of the feed screw 242 are connected to a base 243 through bearings. A ball bush (not illustrated) is fixed to the lower portion of the lens measurement portion 220, and a shaft 244 extending in the X-direction penetrates the ball bush. Both ends of the shaft 244 are connected to the base 243. The motor 245 is attached to the lower surface of the base 243. The drive shaft of the motor 245 is screwed with the feed screw 242.

For example, when the motor 245 is driven, the feed screw 242 is rotated. For example, since the lens measurement portion 220 is fixedly disposed, when the feed screw 242 is fed by the nut portion 241, the base 243 moves in the left and right direction (X-direction) together with the feed screw 242. For example, at this time, the shaft 244 slides in a ball bush (not illustrated). For example, the frame support portion 210 moves in the left and right direction with respect to the lens measurement portion 220 by moving the base 243 in this manner.

A bearing support member 246 is fixed to the upper surface of the base 243. The bearing support member 246 is configured by a front support member located forward of the upper surface of the base 243 and a rear support member located on rearward of upper surface of the base 243. The front support member is provided with a bearing, to which one end of a feed screw 247 extending in the Z-direction is connected. The rear support member is also provided with a bearing through which the other end of the feed screw 247 penetrates. The other end of the feed screw 247 is connected to a drive shaft of a motor (not illustrated) fixed to the rear support member. In addition, a ball bush support member 248 is fixed to the upper surface of the base 243. For example, the ball bush support member 248 is provided with a ball bush, and a shaft 249 extending in the Z-direction penetrates the ball bush. A nut support member (not illustrated) and a shaft support member 251 are fixed to the lower surface of a base 250. For example, the nut support member is provided with a nut portion, which is screwed with the feed screw 247. For example, the shaft support member 251 is provided with a ball bush, and the shaft 249 penetrates the ball bush.

For example, when the motor provided at the other end of the feed screw 247 is driven, the feed screw 247 is rotated. With this, the nut portion of the nut support member is fed to the feed screw 247, and the base 250 to which the nut support member and the nut support member are fixed moves in the front and rear direction (Z-direction). At this time, as the base 250 moves, the shaft support member 251 fixed to the base 250 slides on the shaft 249. For example, even if the feed screw 247 is rotated by the bearing, driving of the motor is not transmitted to the base 243, and the base 243 does not move in the front and rear direction (Z-direction). For example, the frame support portion 210 moves in the front and rear direction with respect to the lens measurement portion 220 by moving the base 250 in this manner.

The base 252 includes a nut portion, and a feed screw (not illustrated) extending in the Y-direction is screwed into the nut portion. One end of a feed screw (not illustrated) is connected to the base 250 through the bearing provided on the base 250. The other end of the feed screw (not illustrated) is connected to an attachment plate 253 through the bearing provided on the attachment plate 253. Further, the base 25 includes a ball bush, and each of a shaft 254 and a shaft 255 extending in the Y-direction penetrates the ball bush. One end of the shaft 254 is connected to the base 250 through the ball bush provided on the base 250. The other end of the shaft 254 is connected to the attachment plate 256 through a ball bush provided on the attachment plate 256. Similarly, one end of the shaft 255 is connected to the base 250 through the ball bush provided on the base 250. The other end of the shaft 255 is connected to a attachment plate 257 through a ball bush provided on the attachment plate 257. For example, a motor 258 is fixed to the attachment plate 253. For example, the drive shaft of the motor 258 is connected to a feed screw (not illustrated) screwed to the nut portion.

For example, when the motor 258 is driven, the nut portion of the base 252 is fed to the feed screw, and the base 252 moves in the up and down direction (Y-direction). At this time, as the base 252 moves, the ball bushes of the base 252 slide on the shaft 254 and the shaft 255, respectively. For example, even if the feed screw is rotated by the motor 258, driving of the motor 258 is not transmitted to the base 250 by the bearing, and the base 250 and the base 243 do not move in the up and down direction (Y-direction). For example, the frame support portion 210 moves in the up and down direction with respect to the lens measurement portion 220 by moving the base 252 in this manner.

### <Control Portion>

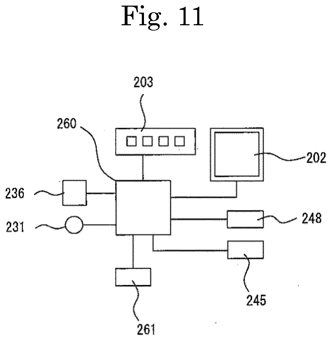

Fig. 11 is a diagram illustrating a control system in the eyeglasses measurement device 200. For example, the control portion 260 is electrically connected to the monitor 202, the operation button 203, the light source 231, the imaging element 236, and motors (for example, the motor 245 and the motor 258) included in the drive unit 240. The memory 261 may be a non-transitory storage medium capable of holding stored contents even when the supply of power is shut off. For example, as the memory 261, a hard disk drive, a flash ROM, a removable USB memory, or the like can be used. The memory 261 may store the optical characteristics and the like of the lens LE measured by the lens measurement portion 220.

For example, the control portion 260 includes a general CPU, a RAM, a ROM, and the like. For example, the CPU controls driving of each portion in the eyeglasses measurement device 200. For example, the RAM temporarily stores various information. For example, various programs executed by the CPU are stored in the ROM. The control portion 260 may be constituted by a plurality of control portions (that is, a plurality of processors).

### <Control Operation>

Hereinafter, measurement of eyeglasses using the eyeglasses measurement system 1 including the eyeglasses frame shape measurement device 100 and the eyeglasses measurement device 200 will be described.

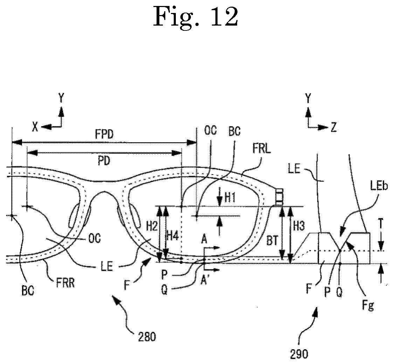

First, assembling of the eyeglasses will be briefly described. Fig. 12 illustrates the eyeglasses in a framed state in which the lens LE is mounted in the frame F. The left view of Fig. 12 is a front view 280 of the eyeglasses. The right view of Fig. 12 is a cross-sectional view 290 taken along line A-A' in the front view 280. The eyeglasses are assembled by fitting the lens LE having a bevel LEb at its peripheral edge into a groove Fg formed in the rim of the frame F.

For example, an operator measures the position of the groove bottom of the rim for each radial angle using the eyeglasses frame shape measurement device 100 and acquires shape data of the groove bottom of the rim. Further, the operator sets the layout indicating a positional relationship between target lens shape data and an optical center position OC using the shape data of the groove bottom of the rim as the target lens shape data, and acquires layout data. For example, such a layout may be at least one of a height H1 from a boxing center position BC of the target lens shape data to the optical center position OC, a height BT from a position P of the bottommost side of the target lens shape data to the optical center position OC, a height (in other words, PD height) H4 from the position of the bottom side directly below the optical center position in the target lens shape data to the optical center position OC, the boxing center-to-center distance FPD in the left and right lenses, the optical center-to-center distance PD in the left and right lenses (an interpupillary distance PD of the eyeglasses wearer), and the like.

Subsequently, the operator machines the peripheral edge of the lens LE using the lens peripheral edge machining device. For example, the operator acquires machining control data for forming a bevel on the periphery of the lens LE based on the target lens shape data and the layout data. In addition to these pieces of data, machining control data based on lens surface shape data (for example, positions of the front surface and rear surface of the lens LE corresponding to target lens shape data, a curve value of the front surface of lens LE, and the like) of the lens LE, a processing condition of the lens LE, and the like may be acquired. The operator performs machining based on such machining control data on the lens LE to acquire the lens LE having the bevel LEb formed on the peripheral edge. Further, the operator frames the lens LE having the bevel LEb formed on the peripheral edge in the groove Fg formed on the rim of the frame F, and assembles the eyeglasses.

Here, the eyeglasses assembled as described above may have a different finish from the set layout. For example, the bevel LEb of the lens LE is not necessarily fitted in the groove Fg of the rim of the frame F without a gap. If there is a gap between the bevel LEb and the groove Fg, the height BT, the height H2, the boxing center-to-center distance FPD, the optical center-to-center distance PD, and the like described above do not follow the layout, and the values may be deviated. When the wearer wears the eyeglasses in such a state, a problem such as poor appearance occurs.

For that reason, in this example, eyeglasses are manufactured (that is, the lens LE is mounted in the frame F) and layout data of the eyeglasses is measured, using the eyeglasses measurement system 1. Hereinafter, manufacture of the eyeglasses and measurement of the layout data of the eyeglasses will be described by taking only the left rim FRL side as an example. The right rim FRR can be considered the same as the left rim FRL and thus, the description thereof is omitted.

### <Acquisition of Target Lens Shape and First Information>

The operator uses the eyeglasses frame shape measurement device 100 to acquire the thickness T (first information) of the rim in the depth direction of the groove FG illustrated in Fig. 12. In this example, for example, the frame measurement portion 60 detects the position of the groove bottom of the rim of the frame F and the position of the outer edge of the rim, respectively, and based on these, acquires the thickness T of the rim in the depth direction of the groove FG. For example, the thickness T of the rim in the depth direction of the groove FG may be the thickness in the depth direction of the groove FG at the upper edge portion of the rim or the thickness in the depth direction of the groove FG at the lower edge portion of the rim. That is, for any position in the entire circumference of the rim, the height from the groove bottom of the rim to the outer edge of the rim may be acquired as the thickness T of the rim in the depth direction of the groove FG. In this example, a case where the frame measurement portion 60 detects the deepest position P of the groove bottom of the left rim FRL of the frame F and the lowest position Q of the outer edge of the left rim FRL, respectively, and acquires the height from the deepest position P to the lowest position Q as the thickness T of the left rim FRL in the depth direction of the groove FG is taken as an example.

The operator widens spacing between the first slider 22 and the second slider 23, clamps the upper and lower edges of the rim with clamp pins, and causes the frame holding portion 20 to hold the frame F. Subsequently, the operator operates the switch unit 12 to start measurement of the position of the groove bottom of the rim.

The control portion 90 controls driving of the frame measurement portion 60 when a measurement start signal is input. The control portion 90 moves the measurement stylus 62 from an initial position to a measurement start position. For example, in this example, the initial position of the measurement stylus 62 in the X-directions and Y-directions is set to a position SL on the left rim FRL side (see Fig. 2). The position SL may be a position at the center of the clamp pins 24a and 24b in the X-direction and a position on a center line N1 in the Y-direction. Of course, the initial position may be set to any position. The control portion 90 rotates the rotation unit 81 such that the tip of the measurement stylus 62 faces the lower clamp pins 24c and 24d of the left rim FRL at the initial position SL. Further, the control portion 90 moves the measurement stylus holding portion 80 to the rim side so that the tip of the measurement stylus 62 contacts the groove bottom of the left rim FRL. For example, in this manner, the control portion 90 moves the measurement stylus 62 from the initial position SL to the measurement start position, inserts the tip of the measurement stylus 62 into the groove of the left rim FRL, and brings the tip of the measurement stylus 62 into contact with the groove bottom of the left rim FRL.

The control portion 90 moves the tip of the measurement stylus 62 along the groove bottom of the left rim FRL. At this time, the control portion 90 drives the motor 83 to rotate the rotation base 82 and rotates the measurement stylus shaft 63 and the measurement stylus 62 around a rotation axis P1 (see Fig. 6B). The measurement stylus 62 moves in the X-direction, the Y-direction, and the Z-direction, following the change in the groove bottom of the rim. In this example, a movement position of the measurement stylus 62 in the X-direction and the Y-direction is detected by the encoder 84, and the movement position of the measurement stylus 62 in the Z-direction is detected by the encoder 85. With this, the measurement stylus 62 moves in the circumferential direction of the groove bottom of the left rim FRL, and the position of the groove bottom of the left rim FRL is measured for each radial angle (rotation angle) of the rotation base 82, and three-dimensional data (xn, yn, zn) (n = 1, 2, 3,..., N) of the entire circumference of the groove bottom of the left rim FRL is acquired. For example, three-dimensional data of the groove bottom of the rim is represented by three-dimensional orthogonal coordinates.

The control portion 90 connects the acquired three-dimensional data of the groove bottom of the left rim FRL to acquire shape data of the groove bottom of the left rim FRL. The shape data of the groove bottom is used as target lens shape data for machining the lens LE. Further, the control portion 90 detects the deepest position of the groove bottom of the left rim FRL based on the three-dimensional data of the groove bottom of the left rim FRL. For example, the deepest position of the groove bottom may be the position at which the coordinate in the Y-direction at the groove bottom of the rim detected by the measurement stylus 62 is the smallest. With this, the deepest position (that is, the position P of the lowest point) P of the groove bottom of the left rim FRL is detected, and three-dimensional data (xP, yP, zP) of the position P is acquired.

In this example, three-dimensional data of the groove bottom of the left rim FRL may be appropriately converted into three-dimensional data (rn, zn, θn) (n = 1, 2, 3,..., N) in which positions in the X-direction and Y-direction are represented by two-dimensional polar coordinates using a radial angle θn and a radial length rn and the position in the Z-direction is represented by Z-coordinates. For example, the radial length rn is a length from the groove bottom of the left rim FRL at each radial angle to a reference position. For example, the reference position may be the position of the rotation axis P1.

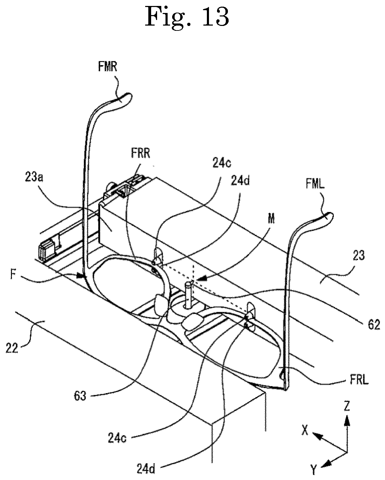

Fig. 13 is a view for describing contact between the second surface 23a of the second slider 23 and the measurement stylus 62. When the position of the groove bottom of the left rim FRL is measured for each radial angle, the control portion 90 brings the tip of the measurement stylus 62 into contact with the second surface 23a of the second slider 23 with which the lower edge of the left rim FRL abuts. For example, in this example, the contact position on the second surface 23a with which the tip of the measurement stylus 62 is in contact is set to a central position M of the second surface 23a. In the contact position M, a position thereof in the X-direction may be a central position between the clamp pin clamping the lower edge of the left rim FRL and the clamp pin clamping the lower edge of the right rim FRR. In the contact position M, a position thereof in the Z-direction may be the center position of the clamp pins 24c and 24d. Of course, the contact position may be set to any position. For example, in this example, a tilt of the second slider 23 (for example, tilt of the second surface 23a with respect to the center line N1) may be calibrated in advance.

The control portion 90 controls driving of the measurement stylus holding portion 80 to move the measurement stylus 62 to the position SL (see Fig. 2) described above, thereby removing the tip of the measurement stylus 62 from the groove of the left rim FRL. Next, the control portion 90 moves the measurement stylus 62 in the Z-direction (downward in this example) to dispose the measurement stylus 62 below the first slider 22 and the second slider 23. Furthermore, the control portion 90 moves the measurement stylus 62 in the X-direction by a predetermined distance to cause the measurement stylus 62 to coincide with the X-direction of the contact position M without contacting the left rim FRL. The predetermined distance (that is, the distance from the position of the clamp pins 23c and 23d in the X-direction to the position of the contact position M in the X-direction) is known in design. The control portion 90 can move the measurement stylus 62 by a predetermined distance in the Z-direction to cause the measurement stylus 62 to coincide with the Z-direction of the contact position M. The predetermined distance (that is, the distance from the lower portion of the slider to the position of the contact position M in the Z-direction) is also known in design. In this state, the control portion 90 moves the measurement stylus holding portion 80 to the rim side so that the measurement stylus 62 contacts the contact position M. For example, in this manner, the control portion 90 brings the measurement stylus 62 into contact with the contact position M of the second surface 23a.

For example, the control portion 90 measures the position of the contact position M as the lowest position Q of the lower edge of the left rim FRL. With this, three-dimensional data of the position of the contact position M (that is, three-dimensional data (xQ, yQ, zQ) of the lowest position Q of the lower edge of the left rim FRL) is acquired based on the movement position of the measurement stylus 62. In this example, three-dimensional data of the lowest position Q of the left rim FRL is represented by three-dimensional orthogonal coordinates.

When three-dimensional data of the deepest position P of the groove bottom of the left rim FRL and three-dimensional data of the lowest position Q of the left rim FRL are acquired, the control portion 90 acquires the thickness T of the rim in the depth direction of the groove FG based on these. For example, the control portion 90 obtains a difference between the three-dimensional data (xP, yP, zP) of the position P of the groove bottom of the left rim FRL and three-dimensional data (xQ, yQ, zQ) of the lowest position Q of the outer edge of the left rim FRL. For example, in this example, the control portion 90 obtains a difference between the position coordinates (that is, three-dimensional data yP) in the Y-direction at the position P of the groove bottom of the left rim FRL and the position coordinates (that is, three-dimensional data yQ) in the Y-direction at the lowest position Q of the outer edge of the left rim FRL. With this, the thickness T of the rim in the depth direction of the groove FG can be acquired. For example, the shape data (that is, the target lens shape data of the left rim FRL) of groove bottom based on the three-dimensional data of the groove bottom of the left rim FRL and the thickness T of the rim in the depth direction of the groove FG are transmitted to the shared server and stored in the memory of the shared server.

### <Machining of Lens and Framing Lens into Frame>

The operator uses a well-known lens meter to measure the optical center position OC at the unmachined lens LE, and applies a mark point on the front surface of the unmachined lens LE. For details of the configuration of the lens meter and application of the mark point, see, for example, JP-A-2013-134240. The operator also attaches the cup to the unmachined lens LE using a known cup attachment device. For details of the configuration of the cup attachment device and attachment of the cup, see, for example, JP-A-2007-216355.

Next, the operator machines the unmachined lens LE by using a well-known lens peripheral edge processing device to form the bevel LEb around the peripheral edge of the lens LE. For example, the control portion of the lens peripheral edge machining device receives the shape data (that is, the target lens shape data of the left rim FRL) of the groove bottom of the left rim FRL from the server and displays the target lens shape data on the monitor included in the lens peripheral edge machining device. The operator operates the monitor to input the layout data of the lens LE, the machining condition, and the like. These pieces of data may be sent to the server and stored in the memory included in the server. The operator holds the lens LE having the cup attached to a lens chuck shaft included in the lens peripheral edge machining device and starts measurement of a lens surface shape of the lens LE. For example, the control portion of the lens peripheral edge machining device controls the lens shape measurement portion included in the lens peripheral edge machining device to measure the lens surface shape of the lens LE. With this, lens surface shape data such as positions of the front surface and the rear surface of the lens LE corresponding to the target lens shape data, a curve value of the front surface of the lens LE, and the like are acquired.

The control portion of the lens edge processing device acquires bevel formation data for forming the bevel LEb on the lens LE based on the lens shape data, the layout data, the machining condition, the lens surface shape data, and the like, and acquires machining control data for machining the peripheral edge of the lens LE based on the bevel formation data. For example, the control portion of the lens peripheral edge machining device moves the lens chuck shaft based on the machining control data and adjusts a relative positional relationship of the lens LE with respect to a grindstone. With this, the operator can process the peripheral edge of the lens LE and form the bevel LEb on the peripheral edge of the lens LE. For details of the configuration of the lens peripheral edge machining device and machining of the lens LE using the lens peripheral edge machining device, see, for example, JP-A-2009-241240. The operator assembles the eyeglasses by framing the lens LE having the bevel LEb formed on the peripheral edge thereof in the groove Fg formed on the rim of the frame F.

### <Acquisition of Second Information>

When the operator assembles the eyeglasses, the operator uses the eyeglasses measurement device 200 to acquire the height from the outer edge of the rim to the optical center position OC of the lens LE. That is, for the eyeglasses with the lens LE mounted in the frame F, the height from the outer edge of the rim to the optical center position OC of the lens LE is acquired. For example, the height from the outer edge of the rim to the optical center position OC of the lens LE may be a height H3 from the lowest position edge (that is, the lowest position Q) of the outer edge of the rim to the optical center position OC. For example, the height from the outer edge of the rim to the optical center position OC of the lens LE may be a height H4 from the outer edge of the rim directly below the optical center position to the optical center position OC. In this example, a case where the lens measurement portion 220 acquires the height H3 from the lowest position Q of the outer edge of the left rim FRL of the frame F to the optical center position OC of the lens LE as a height from the outer edge of the rim to the position OC of the lens LE is taken as an example.

The operator places the eyeglasses on the front support portion 212 and the rear support portion 213 and causes the frame support portion 210 to support the eyeglasses. Subsequently, the operator operates the operation button 203 displayed on the monitor 202 to start measurement of the height H3 from the lowest position Q of the outer edge of the left rim FRL of the frame F to the optical center position OC of the lens LE.

When the measurement start signal is input, the control portion 260 controls driving of the drive unit 240 to move the position of the frame support portion 210 relative to the lens measurement portion 220 from the initial position to the measurement position. For example, in this example, the initial position of the frame support portion 210 in the X-directions and Y-directions is set to a position where the center between upper and lower portion of the front support portion 212 and the center between upper and lower abutment pins 221 (that is, the optical axis L1 of the measurement optical system 230) coincide with each other. For example, in this example, the initial position of the frame support portion 210 in the Z-direction is set to a position separated from the abutment pins 221 by a predetermined distance. The predetermined distance may be a distance such that the lens LE of the eyeglasses placed on the frame support portion 210 and the abutment pin 221 do not contact each other. Of course, the initial position may be set to any position. The control portion 260 drives the motors of the drive unit 240 to move the frame support portion 210 from the initial position in the X, Y, and Z-directions, respectively, and brings the abutment pins 221 into contact with the lens LE framed in the left rim FRL. At this time, the control portion 260 may receive layout data from the server to determine an approximate movement amount of the frame support portion 210 with respect to the lens measurement portion 220. With this, the optical axis L1 of the measurement optical system 230 is aligned near the optical center position of the lens LE framed in the left rim FRL.

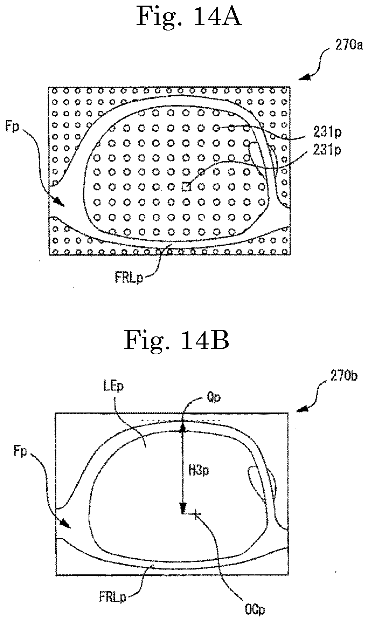

Figs. 14A and 14B are examples of a captured image 270 captured by the imaging element 236. Fig. 14A is a captured image 270a in a state in which the first light source 231a is turned on. Fig. 14B is a captured image 270b in a state in which the second light source 231b is turned on. The control portion 260 turns on the first light source 231a and irradiates the lens LE with the measurement light flux that has passed through only the portion of the measurement index in the index plate 233. The control portion 260 captures an image (frame image Fp) of the frame F projected on the screen 234, an image of the lens LE (lens image LEp), and images (visual target light flux images 231p) of the visual target light flux which has passed through the lens LE by the imaging element 236. With this, the captured image 270a is acquired. The control portion 260 performs image processing on the captured image (that is, the reference image) in a state in which the eyeglasses are not placed on the frame support portion 210 and the captured image 270 in a state in which the eyeglasses are placed on the frame support portion 210 to analyze where in the captured image 270a each visual target luminous flux image 231p in the reference image has moved. The control portion 260 obtains an optical center position OCp in the lens image LEp based on the movement position of each visual target light flux image 231p. The pixel position (that is, the position coordinate) of the optical center position OCp in the lens image LEp on the captured image 270 is stored in the memory 261.

Next, the control portion 260 turns on the second light source 231b, and irradiates the lens LE with the measurement light flux that has passed both a portion of the measurement index part in the index plate 233 and a portion other than the measurement index. With this, the captured image 270b obtained by capturing the frame image Fp and the lens image LEp is acquired. The control portion 260 performs image processing on the captured image 270b to acquire the height H3p from the lowest position Qp of the outer edge in the image (left rim image FRLp) of the left rim FRL to the optical center position OCp in the lens image LEp. For example, the control portion 260 performs edge detection on the captured image 270b and detects the rise and fall of luminance in the captured image 270b, thereby detecting the lowest position Qp of the outer edge in the left rim image FRLp. For example, the control portion 260 stores the pixel position (position coordinate) of the position Qp on the captured image 270 in the memory 261.

For example, the control portion 260 obtains the height H3p from the lowest position Qp of the outer edge in the left rim image FRLp to the optical center position OCp in the lens image Lep, based on the pixel position of the optical center position OCp in the lens image LEp and the pixel position of the lowest position Qp of the outer edge in the left rim image FRLp stored in the memory 261. Since such a height H3p is represented by the number of pixels in the captured image 270b, the height H3p may be converted to an actual height H3. For example, the actual distance corresponding to one pixel of the captured image 270 may be set in advance by experiment, simulation, or the like. With this, the control portion 260 can acquire the height H3 from the lowest position Q of the outer edge in the left rim FRL to the optical center position OC of the lens LE in the eyeglasses placed on the frame support portion 210.

### <Acquisition of Third Information>

When the operator acquires the first information and the second information, the operator acquires the height from the groove bottom of the rim to the optical center position OC of the lens LE based on the first information and the second information. For example, in this example, based on the thickness T (first information) of the left rim FRL in the depth direction of the groove FG and the height H3 (second information) from the lowest position Q of the outer edge in the left rim FRL to the optical center position OC of the lens LE, the height BT (that is, a distance BT vertically connecting the deepest position P of the groove bottom of the rim and the optical center position OC) from the deepest position P of the groove bottom of the left rim FRL to the optical center position OC of the lens LE is acquired.

The control portion 260 of the eyeglasses measurement device 200 can calculate the difference between the height H3 from the lowest position Q of the outer edge in the left rim FRL to the optical center position OC of the lens LE and the thickness T of the left rim FRL in the depth direction of the groove FG to obtain the height BT (third information) from the deepest position P of the groove bottom of the left rim FRL to the optical center position OC of the lens LE. For example, in this example, such a height BT is displayed on the monitor 202. Of course, in addition to the height BT, the thickness T of the rim in the depth direction of the groove FG, the height H3 from the lowest position Q of the outer edge of the rim to the optical center position OC, and the like may be displayed on the monitor 202. Such information may be output by display on a tablet terminal or the like, printing using a printer or the like, storage in an external memory (for example, a USB memory or the like), or the like.

### <Acquisition of Comparison Information>

For example, the control portion 260 of the eyeglasses measurement device 200 acquires comparison information obtained by comparing the acquired height BT (hereinafter, referred to as height BT') of the eyeglasses with the height BT from the position P of the bottommost side of the target lens shape data to the optical center position OC, in which the height BT is set when the lens is machined. For example, the comparison information may be information in which values of the height BT' of the eyeglasses and the height BT which is set when the lens is machined are arranged. For example, the comparison information may be output by display, printing, storage, and the like. Also, for example, the comparison information may be used to determine the quality of the third information.

### <Determination of Quality of Third Information>

For example, the control portion 260 of the eyeglasses measurement device 200 determines quality of the acquired height BT' of the eyeglasses based on the height BT from the position P of the bottom of the lens shape data to the optical center position OC, the height BT is set when the lens is machined.

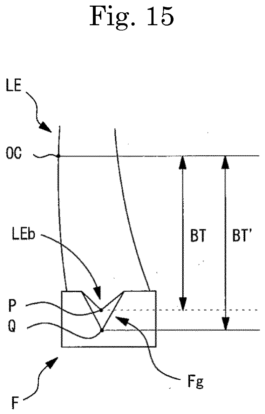

Fig. 15 is a view illustrating the eyeglasses in a state where there is a gap between the groove Fg of the frame F and the bevel LEb of the lens LE. The control portion 260 receives the layout data which is set when the lens LE is machined and detects the amount of deviation between the height BT which is set when the lens is machined and the measured height BT'. In this case, it is determined whether the amount of deviation between the height BT set for the left rim FRL and the height BT' measured at the left rim FRL is within an error range. The error range may be set to the height BT ±0.1 mm or the like in advance. When the amount of deviation between the height BT and the height BT' is within the error range, the control portion 260 determines that the height BT' (that is, third information) is good. When the amount of deviation between the height BT and the height BT' exceeds the error range, the control portion 260 also determines that the height BT' is not good. Similarly to the left rim FRL, for the right rim FRR, the quality of height BT' is also determined based on the amount of deviation between the height BT set for the right rim FRR and the height BT' measured at the right rim FRR.

Further, the control portion 260 detects the amount of deviation between the height BT' measured at the left rim FRL and the height BT' measured at the right rim FRR. In this case, it is determined whether the amount of deviation between the height BT' measured at the left rim FRL and the height BT' measured at the right rim FRR is within an error range. The error range may be set to within 0.1 mm or the like in advance. When the amount of deviation between the height BT' of the left rim FRL and the height BT' of the right rim FRR falls within the error range, the control portion 260 determines that the height BT' of the eyeglasses is good. Further, when the deviation amount between the height BT' of the left rim FRL and the height BT' of the right rim FRR exceeds the error range, the control portion 260 determines that the height BT' of the eyeglasses is not good.

For example, in this example, the determination result of the quality of the height BT' of such eyeglasses is displayed on the monitor 202. As an example, the calculated amount of deviation may be displayed on the monitor 202, or a determination index (for example, A determination if within the error range, B determination if outside the error range, and the like) may be displayed on the monitor 202. Of course, such information may be output by display on a tablet terminal or the like, printing using a printer or the like, storage in an external memory (for example, a USB memory or the like), or the like. The operator can easily determine, by confirming the output information, whether the eyeglasses can be manufactured as the layout.

As described above, for example, the eyeglasses measurement system in this example acquires the first information that indicates the thickness of the rim of the frame of the eyeglasses, in which the thickness is in the depth direction of the groove FG formed on the rim, acquires the second information which indicates the height from the position of the outer edge of the rim to the optical center position of the lens in a framed state in which the lens of the eyeglasses is mounted in the frame, and acquires the third information which indicates the height from the position of the groove bottom of the rim in the framed state to the optical center position based on the first information and the second information. For example, in the case of eyeglasses, since the bevel of the lens is hidden in the groove of the rim of the frame in the framed state, it is difficult to measure the height from the apex of the bevel to the optical center position of the lens. However, with such a configuration, the height from the bevel apex to the optical center position of the lens can be easily obtained.

For example, the eyeglasses measurement system in this example detects the position of the groove bottom of the rim and the position of the outer edge of the rim and acquires the first information based on the position of the groove bottom of the rim and the position of the outer edge of the rim. For example, frames are manufactured based on design data, but individual differences may occur even with the same frame. As in this example, with the configuration in which the position of the groove bottom of the rim and the position of the outer edge of the rim are detected, accurate first information can be acquired for each frame.

For example, the eyeglasses measurement system in this example detects the deepest position of the groove bottom of the rim in the frame and the lowest position of the outer edge at the outer edge of the rim, acquires the height from the deepest position of the groove bottom of the rim to the lowest position of the outer edge of the rim as the first information, acquires the height from the lowest position of the outer edge of the rim to the optical center position of the lens as the second information, and acquires the height from the deepest position of the groove bottom of the rim to the optical center position as third information based on the first information and the second information. With this, for example, the height (that is, BT which is one of the eye point indices from the position where the bevel apex is the lowermost edge to the optical center position of the lens can be easily acquired.

For example, in the eyeglasses measurement system in this example, the frame holing portion abuts on the outer edge of the frame to hold the frame, and the measurement stylus contacts the groove bottom of the rim and the abutment surface of the frame holding portion abutting on the outer edge of the rim , thereby the first information is acquired based on the movement position of the measurement stylus. For example, when manufacturing eyeglasses, the shape (for example, the three-dimensional shape of the groove of the rim of the frame) of the frame is acquired by inserting the measurement stylus into the groove of the rim and making one turn, and machining control data for machining the lens is created using this shape data. Depending on the shape of the measurement stylus, since the measurement stylus does not necessarily correspond to the groove bottom of the rim, the position of the bevel apex formed on the lens based on the shape data changes depending on the contact position of the measurement stylus. As in this example, by the measurement stylus contacting both the groove bottom of the rim and the abutment surface (that, the lowermost edge of the rim) abutting on the outer edge of the rim, the first information can be acquired with high accuracy without providing a configuration for considering an error from the position of the groove bottom of the rim to the contact position of the measurement stylus.

For example, the eyeglasses measurement system according to this example acquires the comparison information obtained by comparing the third information in the framed state of the eyeglasses with the height from the position of the groove bottom of the rim to the optical center position, in which the height is set when the lens is machined. Further, the quality of the third information of the eyeglasses is determined based on the height from the groove bottom of the rim to the optical center position, in which the height is set when the lens is machined. With this, the operator can easily compare and determine whether the layout of the eyeglasses is finished as planned, whether the layout of the eyeglasses is appropriate, and the like.

### <Modification Example>

In this example, a configuration in which, when three-dimensional data is acquired at the lowest position Q of the outer edge of the rim using the eyeglasses frame shape measurement device 100, the measurement stylus 62 is brought into direct contact with the second surface 23a of the second slider 23, is described by being taken as an example, but is not limited thereto. For example, a configuration in which a patch plate is provided on the second surface 23a of the second slider 23 and the measurement stylus 62 is brought into contact with the backing plate may be adopted. As an example, the patch plate may be a metal plate. For example, in this example, the second slider 23 is made of resin, and the measurement stylus 62 is made of metal. If the measurement stylus 62 is brought into contact with the contact position M of the second surface 23a every time the rim is measured, the contact position M of the second surface 23a may be gradually recessed because the resin is softer than metal. If the second surface 23a is recessed, accurate three-dimensional data cannot be obtained at the lowest position Q of the outer edge of the rim. For that reason, three-dimensional data may be acquired by providing the patch plate on the second surface 23a and bringing the measurement stylus 62 into contact with the patch plate. For example, the patch plate may be provided on the entire surface of the second surface 23a, or may be provided so as to have a length at least as long as the left and right direction of the frame F at the second surface 23a. For example, the patch plate may have a contact portion similarly to the second surface 23a.

In this example, a configuration in which the eyeglasses frame shape measurement device 100 includes the frame holding portion 20 for holding the frame F in contact with the outer edge of the rim of the frame F and the measurement stylus 62 in contact with the groove bottom of the rim of the frame F and the abutment surface (in this example, the second surface 23a) between the frame holding portion 20 and the outer edge of the rim, and the thickness T (that is, the first information) of the rim in the depth direction of the groove FG is acquired based on the movement position of the measurement stylus 62 is described by being taken as an example, but is not limited thereto. For example, the eyeglasses frame shape measurement device 100 may be configured to include the projection optical system emitting a measurement light flux from the light source toward the groove bottom of the rim of the frame F and the outer edge of the rim and the light receiving optical system receiving the reflected light flux, in which the measurement light flux is reflected by the groove bottom of the rim of the frame and the outer edge of the rim, by the light receiving element and acquire the thickness T of the rim in the depth direction of the groove FG based on the reflected light flux from the groove bottom of the rim and the reflected light flux from the outer edge of the rim. For example, in this case, the thickness T of the rim in the depth direction of the groove FG may be obtained by detecting the position of the groove bottom of the rim and the position of the outer edge of the rim by image processing from a cross-sectional image obtained by imaging the cross-sectional shape of the groove of the rim. For example, with such a configuration, the eyeglasses measurement system in this example can accurately acquire the position (that is, the position of the bevel apex formed on the lens) of the groove bottom of the rim and the position of the outer edge of the rim, and can acquire the first information with high accuracy.

In this example, in this example, a configuration in which the frame measurement portion 60 of the eyeglasses frame shape measurement device 100 measures three-dimensional data of the lowest position Q of the outer edge of the rim after measuring three-dimensional data of the deepest position P of the groove bottom of the rim is described by being taken as an example, but is not limited thereto. For example, the frame measurement portion 60 may be configured to measure three-dimensional data of the deepest position P of the groove bottom of the rim after measuring three-dimensional data of the lowest position Q of the outer edge of the rim. That is, measurement of the deepest position of the groove bottom of the rim and the lowest position Q of the outer edge of the rim may be performed first.

In this example, a configuration in which the control portion 90 of the eyeglasses frame shape measurement device 100 transmits the thickness T of the rim in the depth direction of the groove FG acquired based on three-dimensional data of the deepest position P of the groove bottom of the rim and three-dimensional data of the lowest position Q of the outer edge of the rim to the server is described by being taken as an example, but is not limited thereto. For example, the control portion 90 of the eyeglasses frame shape measurement device 100 may transmit the three-dimensional data of the deepest position P of the groove bottom of the rim and three-dimensional data of the lowest position Q of the outer edge of the rim to the server. The control portion of the server may acquire the thickness T of the rim in the depth direction of the groove FG based on three-dimensional data of the deepest position P of the groove bottom of the rim and three-dimensional data of the lowest position Q of the outer edge of the rim. That is, the control portion of the server may compute and acquire the thickness T of the rim in the depth direction of the groove FG.

In this example, a configuration in which the frame support portion 210 of the eyeglasses measurement device 200 supports the frame F by the front support portion 212 and the rear support portion 213 is described by being taken as an example, but is not limited thereto. For example, the frame support portion 210 may be configured to support the frame F such that the lower edge of the rim of the frame F abuts on the base 211. For example, similar to the frame holding portion 20 of the eyeglasses frame shape measurement device 100, the frame support portion 210 may be configured to support the frame F by sandwiching the upper edge and the lower edge of the rim of the frame F. That is, for example, the frame support portion 210 may be configured to bring the lower edge of the rim of the frame F into contact with a horizontal reference surface which is a horizontal reference.

In this example, a configuration in which the lens measurement portion 220 of the eyeglasses measurement device 200 detects the deepest position Qp of the outer edge in the left rim image FRLp from the captured image 270b and acquires the height H3p from the deepest position Qp of the outer edge to the optical center position OCp in the lens image LEp is described by being taken as an example, but is not limited thereto. For example, in this example, a configuration in which, when the tilt is detected in the frame image Fp in the captured image 270b (that is, when the frame F is tilted with respect to the imaging surface of the imaging element 236), the tilt of the frame image Fp is corrected to obtain the height H3p from the deepest position Qp of the outer edge to the optical center position OCp in the lens image Lep may be adopted. As an example, the control portion 260 of the eyeglasses measurement device 200 may acquire target lens shape data from the eyeglasses frame shape measurement device 100 and compare the target lens shape data with the frame image Fp to determine the tilt of the frame image Fp. Further, the tilt of the frame image Fp may be corrected based on the target lens shape data.

In this example, a configuration in which the control portion 260 of the eyeglasses measurement device 200 performs quality determination based on the height BT (third information) is described by being taken as an example, but is not limited thereto. For example, the control portion 260 may perform quality determination based on other information, in addition to the height BT. As an example, the control portion 260 may perform the quality determination for the optical center-to-center distance PD between the lens LE framed in the left rim FRL of the eyeglasses and the lens LE framed in the right rim FRR of the eyeglasses. In this case, it may be determined whether the amount of deviation between the optical center-to-center distance PD in the set layout data and the measured optical center-to-center distance PD is within an error range. As an example, the control portion 260 may perform quality determination of the PD height H2 for each of the lens LE framed in the left rim FRL of the eyeglasses and the lens LE framed in the right rim FRR of the eyeglasses. In this case, it may be determined whether the amount of deviation between the PD height H2 in the set layout data and the measured PD height H2 is within an error range.

In this example, a configuration in which the control portion 260 of the eyeglasses measurement device 200 compares the measured height BT' with the height BT which is set when the lens is machined and determines the quality is described by being taken as an example, but is not limited thereto. For example, the quality may be determined by comparing information of at least one of the measured PD height H2, the boxing center-to-center distance FPD, the optical center-to-center distance PD, and the like with the information which is set when the lens is machined. That is, the control portion 260 may determine the quality of the layout of the eyeglasses.

Further, in this example, the measured height BT' may be compared with the PD height H2 which is set when the lens is machined to determine the quality thereof. In this case, the control portion 260 of the eyeglasses measurement device 200 may convert the measured height BT' into the PD height H2.

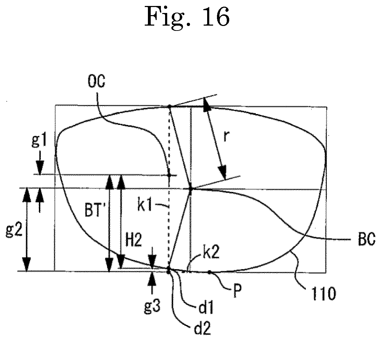

Fig. 16 is a view for describing conversion between the height BT and the PD height. For example, the control portion 260 of the eyeglasses measurement device 200 obtains the position coordinates of the boxing center position BC of the target lens shape data 110 based on the target lens shape data 110 (that is, the shape data 110 of the groove bottom obtained by connecting three-dimensional data of the groove bottom of the rim) acquired by the eyeglasses frame shape measurement device 100. For example, the boxing center position BC is an intersection point of straight lines connecting middle points of opposing sides in a quadrangle surrounding the target lens shape data 110. The position coordinates of the optical center position OC of the lens LE, the deepest position P of the groove bottom of the rim, and the like are obtained by measurement of the eyeglasses using the eyeglasses measurement device 200. For that reason, the control portion 260 can calculate a height g1 from the boxing center position BC to the optical center position OC by the position coordinates of the boxing center position BC and the position coordinates of the optical center position OC. The control portion 260 can also calculate a height g2 from the boxing center position BC to the position P by the position coordinates of the boxing center position BC and the position coordinates of the deepest position P of the groove bottom of the rim. Subsequently, the control portion 260 obtains position coordinates of an intersection point d1 of a straight line k1 extending in the vertical direction through the optical center position OC and the target lens shape data 110. For example, the position coordinates of the intersection point d1 can be calculated based on the coordinate position for each radial angle r in the target lens shape data 110. The control portion 260 also obtains the position coordinates of an intersection point d2 of the straight line k1 extending in the vertical direction through the optical center position OC and the straight line k2 extending horizontally through the deepest position P of the groove bottom of the rim. With this, the control portion 260 can calculate a height g3 from the intersection point d1 to the intersection point d2.

The control portion 260 converts the measured height BT' into the PD height H2 based on the height g1, the height g2 and the height g3 calculated as described above. For example, the control portion 260 may obtain the PD height H2 by subtracting the height g3 from the measured BT' (that is, H2 = BT' - g3). For example, the control portion 260 may obtain the PD height H2 by adding the height g1 and the height g2 and subtracting the height g3 therefrom (that is, H2 = g1 + g2 - g3). For example, even if the measured information and the information which is set when the lens is machined are different, by converting the information in this manner, it is possible to compare each with each other to determine the quality.

In this embodiment, a configuration in which the control portion 260 of the eyeglasses measurement device 200 measures the optical center position of the lens mounted in the frame F and performs the quality determination based on the height BT (third information) is described by being taken as an example, but is not limited thereto. For example, the control portion 260 may measure the optical characteristics of an eye point position of the wearer in the lens mounted in the frame F to determine the quality of the optical characteristics. For example, the optical characteristic may be at least one of a spherical power, a cylindrical power, an astigmatic axis angle, a prism amount, and the like. Hereinafter, a case where a prism amount is measured as an optical characteristic and the quality thereof is determined is taken as an example.

For example, the eye point position of the wearer is a pupil position of the wearer, and when the lens is machined, layout information of the lens is set such that the eye point position coincides with the optical center position. For that reason, for example, in a case where a single focus lens is machined, layout information is set such that the prism amount at the eye point position (that is, the optical center position of the lens) becomes zero. However, when the lens after machining is assembled to the frame F, if the eye point position does not coincide with the optical center position of the lens, a prism may be generated.

Accordingly, the control portion 260 measures the optical characteristics of the eye point position based on the layout data (for example, the height BT and the optical center-to-center distance PD described above) which is set when the lens is machined, and acquires the prism amount thereof. The control portion 260 determines whether or not the acquired prism amount is zero. Of course, an allowable range of error may be provided for the prism amount. The allowable range may be set to within ±0.67 prism diopter or the like in advance. For example, when the acquired amount of prisms falls within the allowable range, the control portion 260 determines that the amount of prisms is good. That is, it is determined that the eye point position and the optical center position coincide with (substantially coincide with) each other. For example, when the acquired amount of prisms exceeds the allowable range, the control portion 260 determines that the amount of prisms is not good. That is, it is determined that the eye point position and the optical center position do not coincide with each other.

Although the case of machining a monofocal lens was exemplified in the above-description, layout information is set so that a predetermined amount of prism is given to an eye point position when machining a lens of prism prescription. For that reason, for example, the control portion 260 may determine whether or not the prism amount at the eye point position based on the layout data which is set when the lens is machined coincides with a predetermined prism amount.

In this embodiment, a configuration in which, when the eyeglasses cannot be manufactured according to the layout, the control portion 260 of the eyeglasses measurement device 200 transmits at least one of the amount of deviation between the measured height BT' and the height BT which is set when the lens is machined, and the amount of deviation between the height BT' measured at the left rim FRL and the height BT' measured at the right rim FRR, and the like to the control portion of the lens peripheral edge machining device, may be adopted. For example, the control portion of the lens peripheral edge machining device may obtain again machining control data in consideration of these amounts of deviation, and may perform lens machining based on the machining control data.

1 eyeglasses measurement system
20 frame holding portion
60 frame measurement portion
90 control portion
100 eyeglasses frame shape measurement device
200 eyeglasses measurement device
210 frame support portion
220 lens measurement portion
240 drive unit
260 control portion

## Claims

1. An eyeglasses measurement system (1) for measuring eyeglasses, comprising:
a first acquisition portion (90) configured to acquire first information which indicates a thickness of a rim (FRR, FRL) of a frame (F) of the eyeglasses, the thickness being in a depth direction of a groove (FG) formed on the rim (FRR, FRL);
a second acquisition portion (260) configured to acquire second information which indicates a height from a position of an outer edge of the rim (FRR, FRL) to an optical center position (OC) of a lens (LE) of the eyeglasses in a framed state where the lens (LE) is mounted in the frame (F); and
a third acquisition portion (260) configured to calculate third information which indicates a height from a position of a groove (FG) bottom of the rim (FRR, FRL) to the optical center position (OC) in the framed state, based on the first information acquired by the first acquisition portion (90) and the second information acquired by the second acquisition portion (260).

2. The eyeglasses measurement system (1) according to claim 1, further comprising:
a groove (FG) bottom detection portion configured to detect the position of the groove (FG) bottom of the rim (FRR, FRL); and
an outer edge detection portion configured to detect the position of the outer edge of the rim (FRR, FRL),
wherein the first acquisition portion (90) is configured to acquire the first information based on the position of the groove (FG) bottom detected by the groove (FG) bottom detection portion and the position of the outer edge detected by the outer edge detection portion.

3. The eyeglasses measurement system (1) according to claim 2,
wherein the frame (F) includes the rim (FRR, FRL) at least at a lower edge of the frame (F),
the groove (FG) bottom detection portion is configured to detect a deepest position (P) of the groove (FG) bottom as the position of the groove (FG) bottom,
the outer edge detection portion is configured to detect a lowest position (Q) of the outer edge as the position of the outer edge,
the first acquisition portion (90) is configured to acquire a height from the deepest position (P) of the groove (FG) bottom to the lowest position (Q) of the outer edge as the first information,
the second acquisition portion (260) is configured to acquire a height from the lowest position of the outer edge to the optical center position (OC) as the second information, and
the third acquisition portion (260) is configured to calculate a height from the deepest position of the groove (FG) bottom to the optical center position (OC) as the third information, based on the first information and the second information.

4. The eyeglasses measurement system (1) according to claim 1 or 3,
wherein the third information is at least any one of a BT height, which is a height from the deepest position of the groove (FG) bottom of the rim (FRR, FRL) to the optical center position (OC) of the lens (LE), and a PD height, which is a height from the position of the groove (FG) bottom of the rim (FRR, FRL) directly below the optical center position (OC) of the lens (LE) to the optical center position (OC), wherein the BT height and the PD height are indices indicating an eye point height for the eyeglasses.

5. The eyeglasses measurement system (1) according to claim 2 or 3, further comprising:
a frame (F) holding portion that abuts on the outer edge of the rim (FRR, FRL) to hold the frame (F); and
a measurement stylus that contacts the groove (FG) bottom of the rim (FRR, FRL) and an abutment surface of the frame (F) holding portion abutting on the outer edge of the rim (FRR, FRL),
wherein the first acquisition portion (90) is configured to acquire the first information based on a movement position of the measurement stylus.

6. The eyeglasses measurement system (1) according to claim 2 or 3, further comprising:
a projection optical system that is configured to emit a measurement light flux from a light source toward the groove (FG) bottom and the outer edge of the rim (FRR, FRL); and
a light receiving optical system in which a light receiving element is configured to receive a reflected light flux obtained by reflecting the measurement light flux by the groove (FG) bottom and the outer edge,
wherein the first acquisition portion (90) is configured to acquire the first information based on the reflected light flux from the groove (FG) bottom and the reflected light flux from the outer edge.

7. The eyeglasses measurement system (1) according to any one of claims 1 to 6, further comprising:
a comparison information acquisition portion that is configured to acquire comparison information obtained by comparing the third information in the framed state of the eyeglasses with a height from the position of the groove (FG) bottom of the rim (FRR, FRL) to the optical center position (OC), wherein the height is set when the lens (LE) is machined.

8. The eyeglasses measurement system (1) according to claim 7, further comprising:
a determination portion that is configured to determine quality of the third information in the framed state of the eyeglasses based on the height from the position of the groove (FG) bottom of the rim (FRR, FRL) to the optical center position (OC), wherein the height is set when the lens (LE) is machined.

9. An eyeglasses measurement method used in an eyeglasses measurement system (1) for measuring eyeglasses,
wherein the eyeglasses measurement method, executed by a processor in the eyeglasses measurement system (1) that measures eyeglasses, comprises:
a first acquisition step of acquiring first information which indicates a thickness of a rim (FRR, FRL) of a frame (F) of the eyeglasses, the thickness being in a depth direction of a groove (FG) formed on the rim (FRR, FRL);
a second acquisition step of acquiring second information which indicates a height from a position of an outer edge of the rim (FRR, FRL) to an optical center position (OC) of a lens (LE) of the eyeglasses in a framed state in which the lens (LE) is mounted in the frame (F); and
a third acquisition step of calculating third information which indicates a height from the position of the groove (FG) bottom of the rim (FRR, FRL) to the optical center position (OC) in the framed state, based on the first information acquired in the first acquisition step and the second information acquired in the second acquisition step.

10. An eyeglasses measurement program comprising instructions to cause the device of claims 1 to 8 to execute the steps of the method of claim 9, the eyeglasses measurement program being executed by a processor in the eyeglasses measurement system (1).

## Patentansprüche

1. Brillenmesssystem (1) zum Messen einer Brille, umfassend:
einen ersten Erfassungsabschnitt (90), der konfiguriert ist, um erste Informationen zu erfassen, die eine Dicke eines Rands (FRR, FRL) eines Rahmens (F) der Brille angeben, wobei die Dicke in einer Tiefenrichtung einer auf dem Rand (FRR, FRL) ausgebildeten Nut (FG) ist;
einen zweiten Erfassungsabschnitt (260), der konfiguriert ist, um zweite Informationen zu erfassen, die eine Höhe von einer Position einer Außenkante des Rands (FRR, FRL) zu einer optischen Mittenposition (OC) einer Linse (LE) der Brille in einem gerahmten Zustand angeben, in dem die Linse (LE) in dem Rahmen (F) montiert ist; und
einen dritten Erfassungsabschnitt (260), der konfiguriert ist, um dritte Informationen zu berechnen, die eine Höhe von einer Position eines Nutbodens (FG) des Rands (FRR, FRL) zu der optischen Mittenposition (OC) in dem gerahmten Zustand angeben, basierend auf den durch den ersten Erfassungsabschnitt (90) erfassten ersten Informationen und den durch den zweiten Erfassungsabschnitt (260) erfassten zweiten Informationen.

2. Brillenmesssystem (1) nach Anspruch 1, ferner umfassend:
einen Nutbodendetektionsabschnitt (FG), der konfiguriert ist, um die Position des Nutbodens (FG) des Rands (FRR, FRL) zu detektieren; und
einen Außenkantendetektionsabschnitt, der konfiguriert ist, um die Position der Außenkante des Rands (FRR, FRL) zu detektieren,
wobei der erste Erfassungsabschnitt (90) konfiguriert ist, um die ersten Informationen basierend auf der durch den Nutbodendetektionsabschnitt (FG) detektierten Position des Nutbodens (FG) und der durch den Außenkantendetektionsabschnitt detektierten Position der Außenkante zu erfassen.

3. Brillenmesssystem (1) nach Anspruch 2,
wobei der Rahmen (F) den Rand (FRR, FRL) zumindest an einer Unterkante des Rahmens (F) beinhaltet,
der Nutbodendetektionsabschnitt (FG) konfiguriert ist, um eine tiefste Position (P) des Nutbodens (FG) als die Position des Nutbodens (FG) zu detektieren,
der Außenkantendetektionsabschnitt konfiguriert ist, um eine tiefste Position (Q) der Außenkante als die Position der Außenkante zu detektieren,
der erste Erfassungsabschnitt (90) konfiguriert ist, um eine Höhe von der tiefsten Position (P) des Nutbodens (FG) zu der tiefsten Position (Q) der Außenkante als die ersten Informationen zu erfassen,
der zweite Erfassungsabschnitt (260) konfiguriert ist, um eine Höhe von der tiefsten Position der Außenkante zu der optischen Mittenposition (OC) als die zweiten Informationen zu erfassen, und
der dritte Erfassungsabschnitt (260) konfiguriert ist, um eine Höhe von der tiefsten Position des Nutbodens (FG) zu der optischen Mittenposition (OC) als die dritten Informationen basierend auf den ersten Informationen und den zweiten Informationen zu berechnen.

4. Brillenmesssystem (1) nach Anspruch 1 oder 3,
wobei die dritten Informationen mindestens eine von einer BT-Höhe, die eine Höhe von der tiefsten Position des Nutbodens (FG) des Rands (FRR, FRL) zu der optischen Mittenposition (OC) der Linse (LE) ist, und einer PD-Höhe, die eine Höhe von der Position des Nutbodens (FG) des Rands (FRR, FRL) direkt unter der optischen Mittenposition (OC) der Linse (LE) zu der optischen Mittenposition (OC) ist, sind, wobei die BT-Höhe und die PD-Höhe Indizes sind, die eine Augenpunkthöhe für die Brille angeben.

5. Brillenmesssystem (1) nach Anspruch 2 oder 3, ferner umfassend:
einen Rahmenhalteabschnitt (F), der an der Außenkante des Rands (FRR, FRL) anliegt, um den Rahmen (F) zu halten; und
einen Messstift, der den Nutboden (FG) des Rands (FRR, FRL) und eine Anlagefläche des Rahmenhalteabschnitts (F), die an der Außenkante des Rands (FRR, FRL) anliegt, berührt,
wobei der erste Erfassungsabschnitt (90) konfiguriert ist, um die ersten Informationen basierend auf einer Bewegungsposition des Messstifts zu erfassen.

6. Brillenmesssystem (1) nach Anspruch 2 oder 3, ferner umfassend:
ein optisches Projektionssystem, das konfiguriert ist, um einen Messlichtfluss von einer Lichtquelle zu dem Nutboden (FG) und der Außenkante des Rands (FRR, FRL) zu emittieren; und
ein optisches Lichtempfangssystem, in dem ein Lichtempfangselement konfiguriert ist, um einen reflektierten Lichtfluss zu empfangen, der durch Reflektieren des Messlichtflusses durch den Nutboden (FG) und die Außenkante erhalten wird,
wobei der erste Erfassungsabschnitt (90) konfiguriert ist, um die ersten Informationen basierend auf dem reflektierten Lichtfluss von dem Nutboden (FG) und dem reflektierten Lichtfluss von der Außenkante zu erfassen.

7. Brillenmesssystem (1) nach einem der Ansprüche 1 bis 6, ferner umfassend:
einen Vergleichsinformationserfassungsabschnitt, der konfiguriert ist, um Vergleichsinformationen zu erfassen, die durch Vergleichen der dritten Informationen in dem gerahmten Zustand der Brille mit einer Höhe von der Position des Nutbodens (FG) des Rands (FRR, FRL) zu der optischen Mittenposition (OC) erhalten werden, wobei die Höhe eingestellt wird, wenn die Linse (LE) bearbeitet wird.

8. Brillenmesssystem (1) nach Anspruch 7, ferner umfassend:
einen Bestimmungsabschnitt, der konfiguriert ist, um die Qualität der dritten Informationen in dem gerahmten Zustand der Brille basierend auf der Höhe von der Position des Nutbodens (FG) des Rands (FRR, FRL) zu der optischen Mittenposition (OC) zu bestimmen, wobei die Höhe eingestellt wird, wenn die Linse (LE) bearbeitet wird.

9. Brillenmessverfahren, das in einem Brillenmesssystem (1) zum Messen einer Brille verwendet wird,
wobei das Brillenmessverfahren, das von einem Prozessor in dem Brillenmesssystem (1), das eine Brille misst, ausgeführt wird, umfasst:
einen ersten Erfassungsschritt des Erfassens erster Informationen, die eine Dicke eines Rands (FRR, FRL) eines Rahmens (F) der Brille angeben, wobei die Dicke in einer Tiefenrichtung einer auf dem Rand (FRR, FRL) ausgebildeten Nut (FG) ist;
einen zweiten Erfassungsschritt des Erfassens zweiter Informationen, die eine Höhe von einer Position einer Außenkante des Rands (FRR, FRL) zu einer optischen Mittenposition (OC) einer Linse (LE) der Brille in einem gerahmten Zustand angeben, in dem die Linse (LE) in dem Rahmen (F) montiert ist; und
einen dritten Erfassungsschritt des Berechnens dritter Informationen, die eine Höhe von der Position des Nutbodens (FG) des Rands (FRR, FRL) zu der optischen Mittenposition (OC) in dem gerahmten Zustand angeben, basierend auf den in dem ersten Erfassungsschritt erfassten ersten Informationen und den in dem zweiten Erfassungsschritt erfassten zweiten Informationen.

10. Brillenmessprogramm, umfassend Anweisungen, um die Vorrichtung nach den Ansprüchen 1 bis 8 zu veranlassen, die Schritte des Verfahrens nach Anspruch 9 auszuführen, wobei das Brillenmessprogramm von einem Prozessor in dem Brillenmesssystem (1) ausgeführt wird.

## Revendications

1. Système de mesure de lunettes (1) pour mesurer des lunettes, comprenant :
une première partie d'acquisition (90) configurée pour acquérir des premières informations qui indiquent une épaisseur d'un bord (FRR, FRL) d'une monture (F) des lunettes, l'épaisseur étant dans une direction de profondeur d'une rainure (FG) formée sur le bord (FRR, FRL) ;
une deuxième partie d'acquisition (260) configurée pour acquérir des deuxièmes informations qui indiquent une hauteur à partir d'une position d'un bord externe du bord (FRR, FRL) jusqu'à une position de centre optique (OC) d'un verre (LE) des lunettes dans un état de monture où le verre (LE) est monté dans la monture (F) ; et
une troisième partie d'acquisition (260) configurée pour calculer des troisièmes informations qui indiquent une hauteur à partir d'une position d'un fond de rainure (FG) du bord (FRR, FRL) jusqu'à la position de centre optique (OC) dans l'état de monture, sur la base des premières informations acquises par la première partie d'acquisition (90) et des deuxièmes informations acquises par la deuxième partie d'acquisition (260).

2. Système de mesure de lunettes (1) selon la revendication 1, comprenant en outre :
une partie de détection de fond de rainure (FG) configurée pour détecter la position du fond de rainure (FG) du bord (FRR, FRL) ; et
une partie de détection de bord externe configurée pour détecter la position du bord externe du bord (FRR, FRL),
dans lequel la première partie d'acquisition (90) est configurée pour acquérir les premières informations sur la base de la position du fond de rainure (FG) détectée par la partie de détection de fond de rainure (FG) et de la position du bord externe détectée par la partie de détection de bord externe.

3. Système de mesure de lunettes (1) selon la revendication 2,
dans lequel la monture (F) comprend le bord (FRR, FRL) au moins au niveau d'un bord inférieur de la monture (F),
la partie de détection de fond de rainure (FG) est configurée pour détecter une position la plus profonde (P) du fond de rainure (FG) en tant que position du fond de rainure (FG),
la partie de détection de bord externe est configurée pour détecter une position la plus basse (Q) du bord externe en tant que position du bord externe,
la première partie d'acquisition (90) est configurée pour acquérir une hauteur de la position la plus profonde (P) du fond de rainure (FG) à la position la plus basse (Q) du bord externe en tant que premières informations,
la deuxième partie d'acquisition (260) est configurée pour acquérir une hauteur de la position la plus basse du bord externe à la position de centre optique (OC) en tant que deuxièmes informations, et
la troisième partie d'acquisition (260) est configurée pour calculer une hauteur de la position la plus profonde du fond de rainure (FG) à la position de centre optique (OC) en tant que troisièmes informations, sur la base des premières informations et des deuxièmes informations.

4. Système de mesure de lunettes (1) selon la revendication 1 ou 3,
dans lequel les troisièmes informations sont au moins l'une quelconque parmi une hauteur BT, qui est une hauteur à partir de la position la plus profonde du fond de rainure (FG) du bord (FRR, FRL) jusqu'à la position de centre optique (OC) du verre (LE), et une hauteur PD, qui est une hauteur à partir de la position du fond de rainure (FG) du bord (FRR, FRL) directement en dessous de la position de centre optique (OC) du verre (LE) jusqu'à la position de centre optique (OC), dans lequel la hauteur BT et la hauteur PD sont des indices indiquant une hauteur de point d'oeil pour les lunettes.

5. Système de mesure de lunettes (1) selon la revendication 2 ou 3, comprenant en outre :
une partie de maintien de monture (F) qui vient en butée sur le bord externe du bord (FRR, FRL) pour maintenir la monture (F) ; et
un stylet de mesure qui vient en contact avec le fond de rainure (FG) du bord (FRR, FRL) et une surface de butée de la partie de maintien de monture (F) venant en butée sur le bord externe du bord (FRR, FRL),
dans lequel la première partie d'acquisition (90) est configurée pour acquérir les premières informations sur la base d'une position de mouvement du stylet de mesure.

6. Système de mesure de lunettes (1) selon la revendication 2 ou 3, comprenant en outre :
un système optique de projection qui est configuré pour émettre un flux lumineux de mesure à partir d'une source de lumière vers le fond de rainure (FG) et le bord externe du bord (FRR, FRL) ; et
un système optique de réception de lumière dans lequel un élément de réception de lumière est configuré pour recevoir un flux lumineux réfléchi obtenu en réfléchissant le flux lumineux de mesure par le fond de rainure (FG) et le bord externe,
dans lequel la première partie d'acquisition (90) est configurée pour acquérir les premières informations sur la base du flux lumineux réfléchi à partir du fond de rainure (FG) et du flux lumineux réfléchi à partir du bord externe.

7. Système de mesure de lunettes (1) selon l'une quelconque des revendications 1 à 6, comprenant en outre :
une partie d'acquisition d'informations de comparaison qui est configurée pour acquérir des informations de comparaison obtenues en comparant les troisièmes informations dans l'état de monture des lunettes avec une hauteur à partir de la position du fond de rainure (FG) du bord (FRR, FRL) jusqu'à la position de centre optique (OC), dans lequel la hauteur est réglée lorsque le verre (LE) est usiné.

8. Système de mesure de lunettes (1) selon la revendication 7, comprenant en outre :
une partie de détermination qui est configurée pour déterminer la qualité des troisièmes informations dans l'état de monture des lunettes sur la base de la hauteur à partir de la position du fond de rainure (FG) du bord (FRR, FRL) jusqu'à la position de centre optique (OC), dans lequel la hauteur est réglée lorsque le verre (LE) est usiné.

9. Procédé de mesure de lunettes utilisé dans un système de mesure de lunettes (1) pour mesurer des lunettes,
dans lequel le procédé de mesure de lunettes, exécuté par un processeur dans le système de mesure de lunettes (1) qui mesure des lunettes, comprend :
une première étape d'acquisition consistant à acquérir des premières informations qui indiquent une épaisseur d'un bord (FRR, FRL) d'une monture (F) des lunettes, l'épaisseur étant dans une direction de profondeur d'une rainure (FG) formée sur le bord (FRR, FRL) ;
une deuxième étape d'acquisition consistant à acquérir des deuxièmes informations qui indiquent une hauteur à partir d'une position d'un bord externe du bord (FRR, FRL) jusqu'à une position de centre optique (OC) d'un verre (LE) des lunettes dans un état de monture dans lequel le verre (LE) est monté dans la monture (F) ; et
une troisième étape d'acquisition consistant à calculer des troisièmes informations qui indiquent une hauteur à partir de la position du fond de rainure (FG) du bord (FRR, FRL) jusqu'à la position de centre optique (OC) dans l'état de monture, sur la base des premières informations acquises dans la première étape d'acquisition et des deuxièmes informations acquises dans la deuxième étape d'acquisition.

10. Programme de mesure de lunettes comprenant des instructions pour amener le dispositif des revendications 1 à 8 à exécuter les étapes du procédé de la revendication 9, le programme de mesure de lunettes étant exécuté par un processeur dans le système de mesure de lunettes (1).
